(19) Europäisches Patentamt
European Patent Office
Office européen des brevets

(11) **EP 4 113 873 A1**

(12) **EUROPEAN PATENT APPLICATION**
published in accordance with Art. 153(4) EPC

(43) Date of publication:
**04.01.2023 Bulletin 2023/01**

(21) Application number: **20923122.4**

(22) Date of filing: **05.03.2020**

(51) International Patent Classification (IPC):
**H04L 1/00** (2006.01)

(52) Cooperative Patent Classification (CPC):
**H04L 1/00**

(86) International application number:
**PCT/CN2020/077948**

(87) International publication number:
**WO 2021/174483 (10.09.2021 Gazette 2021/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **HE, Chuanfeng**
**Dongguan, Guangdong 523860 (CN)**

(74) Representative: **Ipside**
**7-9 Allées Haussmann**
**33300 Bordeaux Cedex (FR)**

(54) **MONITORING OPPORTUNITY DETERMINING METHOD AND APPARATUS**

(57) Embodiments of the present application provides a method and apparatus for determining a monitoring occasion, the method includes: determining, according to first information, a number of times of repetitive transmission for a physical downlink control channel PDCCH; and determining N slots according to the number of the times of the repetitive transmission for the PDCCH, where N is used to indicate a number of slots included in the monitoring occasion for monitoring the PDCCH, and N is an integer greater than 1. The requirement of the repetitive transmission for a PDCCH can be met, and the performance of the PDCCH transmission can be improved.

Determining, according to first information, a number of times of repetitive transmission for a PDCCH — S61

Determining N slots according to the number of the times of the repetitive transmission for the PDCCH, where N is used to indicate a number of slots included in the monitoring occasion for monitoring the PDCCH, and N is an integer greater than 1 — S62

FIG. 6

EP 4 113 873 A1

**Description**

**TECHNICAL FIELD**

The present application relates to a communication technology field, in particular to a method and an apparatus for determining a monitoring occasion.

**BACKGROUND**

In new radio (new radio, NR) of 5G, repeated transmissions of a physical downlink control channel (physical downlink control channel, PDCCH) can ensure the transmission performance of the PDCCH.

At present, the NR system is mainly designed to meet services of the high efficiency, high spectral efficiency, large bandwidth, etc. however in NR-light system, the bandwidth supported by a terminal device is reduced, which leads to a limited bandwidth of control resource set (Control Resource Set, CORESET) of the PDCCH. In order to ensure the transmission performance of the PDCCH, the PDCCH needs to be repeatedly transmitted in a time domain, where, the terminal device monitors the repeatedly transmitted PDCCH through a monitoring occasion indicated by a PDCCH search space. However, a current monitoring occasion indicated by the PDCCH search space cannot meet the requirement of repeated transmissions of the PDCCH, resulting in poor performance of the PDCCH transmission.

**SUMMARY**

In a first aspect, an embodiment of the present application provides a method for determining a monitoring occasion, applied in a terminal device, including:

determining, according to first information, a number of times of repetitive transmission for a PDCCH; and determining N slots according to the number of the times of the repetitive transmission for the PDCCH, where N is used to indicate a number of slots included in the monitoring occasion for monitoring the PDCCH, and N is an integer greater than 1.

In a second aspect, an embodiment of the present application provides a method for determining a monitoring occasion, applied in a terminal device, including:
determining N slots according to first information, where the N slots are used to indicate a number of slots included in the monitoring occasion for monitoring a PDCCH, N is an integer greater than 1, and the first information includes at least one of following information:

first indication information, a frequency band;
or, the first information is a preset number of slots included in a monitoring occasion of the PDCCH.

In a third aspect, an embodiment of the present application provides a method for determining a monitoring occasion, applied in a network device, including:

determining, according to first information, a number of times of repetitive transmission for a PDCCH; and determining N slots according to the number of the times of the repetitive transmission for the PDCCH, where N is used to indicate a number of slots included in the monitoring occasion of a PDCCH, and N is an integer greater than 1.

In a fourth aspect, an embodiment of the present application provides a method for determining a monitoring occasion, applied in a network device, including:
determining N slots according to first information, where the N slots are used to indicate a number of slots included in the monitoring occasion of a PDCCH, N is an integer greater than 1, and the first information includes at least one of following information:

first indication information, a frequency band;
or, the first information is a preset number of slots included in the monitoring occasion of the PDCCH.

In a fifth aspect, an embodiment of the present application provides an apparatus for determining a monitoring occasion, including:

a first processing module, configured to determine, according to first information, a number of times of repetitive transmission for a PDCCH; and
a first processing module, configured to determine N slots according to the number of the times of the repetitive transmission for the PDCCH, where N is used to indicate a number of slots included in the monitoring occasion for monitoring the PDCCH, and N is an integer greater than 1.

In a sixth aspect, an embodiment of the present application provides an apparatus for determining a monitoring occasion, including:
a determination module, configured to determine N slots according to first information, where the N slots are used to indicate a number of slots included in the monitoring occasion for monitoring a PDCCH, N is an integer greater than 1, and the first information includes at least one of following information:

first indication information, a frequency band;
or, the first information is a preset number of slots included in the monitoring occasion of the PDCCH.

In a seventh aspect, an embodiment of the present application provides an apparatus for determining a monitoring occasion, including:

a first processing module, configured to determine, according to first information, a number of times of repetitive transmission for a PDCCH; and
a second processing module, configured to determine N slots according to the number of the times of the repetitive transmission for the PDCCH, where N is used to indicate a number of slots included in the monitoring occasion of PDCCH, and N is an integer greater than 1.

In an eighth aspect, an embodiment of the present application provides an apparatus for determining a monitoring occasion, including:
a determination module, configured to determine N slots according to first information, where the N slots are used to indicate a number of slots included in the monitoring occasion of a PDCCH, N is an integer greater than 1, and the first information includes at least one of following information:

first indication information, a frequency band;
or, the first information is a preset number of slots included in the monitoring occasion of the PDCCH.

In a ninth aspect, an embodiment of the present application provides a terminal device, including: a transceiver, a processor, a memory;

the memory stores computer executable instructions;
the processor executes the computer executable instructions stored in the memory, to enable the processor to execute the method for determining a monitoring occasion described as any item of the first aspect, or to enable the processor to execute the method for determining a monitoring occasion described as any item of the second aspect.

In a tenth aspect, an embodiment of the present application provides a network device, including: a transceiver, a processor, a memory;

the memory stores computer executable instructions;
the processor executes the computer executable instructions stored in the memory, to enable the processor to execute the method for determining a monitoring occasion described as any item of the third aspect, or to enable the processor to execute the method for determining a monitoring occasion described as any item of the fourth aspect.

In an eleventh aspect, an embodiment of the present application provides a computer readable storage medium, where computer executable instructions are stored in the computer readable storage medium, when the computer executable instructions are executed by a processor, the computer executable instructions are configured to implement the method for determining a monitoring occasion described as any item of the first aspect, or when he computer executable instructions are executed by a processor, the computer executable instructions are configured to implement the method for determining a monitoring occasion described as any item of the second aspect.
In a twelfth aspect, an embodiment of the present application provides a computer readable storage medium, where computer executable instructions are stored in the computer readable storage medium, when the computer executable instructions are executed by a processor, the computer executable instructions are configured to implement the method for determining a monitoring occasion described as any item of the third aspect, or when the computer executable instructions are executed by a processor, the computer executable instructions are configured to implement the method for determining a monitoring occasion described as any item of the fourth aspect.

The method and apparatus for determining a monitoring occasion provided by the embodiments of the present application, a number of times of repetitive transmission for a PDCCH is determined according to first information; and then N slots are determined according to the number of the times of the repetitive transmission for the PDCCH, where N is an integer greater than 1. The terminal device can monitor the repeatedly transmitted PDCCH during the N slots of the monitoring occasion of the PDCCH, thereby the requirement of the repetitive transmission for a PDCCH can be met, and the performance of the PDCCH transmission can be improved.

## BRIEF DESCRIPTION OF DRAWINGS

FIG. 1 is a schematic diagram of an application scenario provided by an embodiment of the present application.
FIG. 2 is a schematic diagram of sending wireless signals through beams provided by an embodiment of the present application.
FIG. 3 is a schematic diagram of a SSB provided by an embodiment of the present application.
FIG. 4 is a schematic diagram of PDSCH scheduling provided by an embodiment of the present application.
FIG. 5 is a schematic diagram of the distribution of slots included in a monitoring occasion of a PDCCH provided by an embodiment of the present application.
FIG. 6 is a schematic a first flowchart of a method for determining a monitoring occasion provided by an embodiment of the present application.
FIG. 7 is a schematic a second flowchart of a method for determining a monitoring occasion provided by an embodiment of the present application.
FIG. 8 is a schematic diagram of a monitoring occasion of a PDCCH provided by an embodiment of the present application.
FIG. 9 is a schematic diagram of determining a number of times of repetitive transmission for a PDCCH according to a frequency band provided by an embodiment of the present application.
FIG. 10 is a schematic diagram of determining N according to a frequency band provided by an embodiment of the present application.
FIG. 11 is a schematic a third flowchart of a method for determining a monitoring occasion provided by an embodiment of the present application.
FIG. 12 is a schematic a fourth flowchart of a method for determining a monitoring occasion provided by an embodiment of the present application.
FIG. 13 is a first structural schematic diagram of an apparatus for determining a monitoring occasion provided by an embodiment of the present application.
FIG. 14 is a second structural schematic diagram of an apparatus for determining a monitoring occasion provided by an embodiment of the present application.
FIG. 15 is a third structural schematic diagram of an apparatus for determining a monitoring occasion provided by an embodiment of the present application.
FIG. 16 is a fourth structural schematic diagram of an apparatus for determining a monitoring occasion provided by an embodiment of the present application.
FIG. 17 is a structural schematic diagram of a terminal device provided by an embodiment of the present application.
FIG. 18 is a structural schematic diagram of a network device provided by an embodiment of the present application.

## DESCRIPTION OF EMBODIMENTS

In order to facilitate understanding, the concepts involved in the present application will be explained first.

Terminal device: can be a device which includes wireless transceiver functions and can cooperate with a network device to provide a user with communication services. Specifically, the terminal device may refer to a user equipment (User Equipment, UE), access terminal, subscriber unit, subscriber station, mobile station, mobile platform, remote station, remote terminal, mobile device, user terminal, terminal, wireless communication device, user agent or user device. For example, the terminal device may be a cellular phone, cordless phone, session initiation protocol (Session Initiation Protocol, SIP) phone, wireless local loop (Wireless Local Loop, WLL) station, personal digital processing (Personal Digital Assistant, PDA), handheld device with wireless communication function, computing device or other processing device connected to a wireless modem, on-board device, wearable device, a terminal device in a future 5G network or post-5G network, etc.

Network device: a network device may refer to a device configured to communicate with the terminal device, for example, may be a base station (Base Transceiver Station, BTS) in a global mobile communication system (Global System for Mobile Communication, GSM), or a code division multiple access (Code Division Multiple Access, CDMA) communication system, or a node base station (NodeB, NB) in a wideband code division multiple access (Wideband Code Division Multiple Access, WCDMA) system, or an evolutional node base station (Evolutional Node B, eNB or eNodeB) in an LTE system; or the network device can be a relay station, an access point, an on-board device, a wearable device, a network-side device in a future 5G network or post-5G network, or a network device in future evolved public land mobile network (Public Land Mobile Network, PLMN) network, etc.

The network device involved in the embodiments of the present application may also be referred to as a radio access network (Radio Access Network, RAN) device. The RAN device is connected with the terminal device, and is used for receiving data of the terminal device and sending it to a core network device. The RAN device corresponds to a different device in different communication systems. For example, in 2G system, it corresponds to a base station and a base station controller; in 3G system, it corresponds to a base station and a radio network controller (Radio Network Controller, RNC); in 4G system, it corresponds to evolutional node base station (Evolutional Node B, eNB); in 5G system, it corresponds an access network device (e.g. gNB, centralized unit CU, distributed unit DU) in 5G system such as NR.

Search space (search space): search space in LTE system is defined as a series control channel element (Control Channel Element, CCE) resources required for blind detection for each aggregation level, including a CEE starting position and a number of candidate resources.

Common search space: one common search space is shared by all terminal devices in one cell.

Specific search space: one specific search space is used by one terminal device.

Control resource set (Control Resource Set, CORESET): is a type of time-frequency resource set introduced in NR, and a UE performs PDCCH detection in a corresponding control resource set. The control resource set consists of a group of resource element groups (Resource Element Group, REG).

PBCH: physical broadcast channel, physical broadcast channel.

PDSCH: physical downlink shared channel, physical downlink shared channel.

BWP: bandwidth part, initial bandwidth part.

NR-light system: a light new radio system, corresponds to a NR system. The NR system is mainly designed to support the enhanced mobile broadband (Enhanced Mobile Broadband, eMBB) service, which is mainly to meet the requirements of the high efficiency, high spectral efficiency and large bandwidth. In fact, except eMBB, there are many different types of services, such as sensor networks, video surveillance, wearable, etc. These services have different requirements from eMBB services in terms of speed, bandwidth, power consumption, cost, etc. In order to support some applications with low data rate and high transmission delay, Internet of things technologies such as narrow band Internet of things (Narrow Band Internet of Things, NB-IOT) and machine type communications (Machine Type Communications, MTC) have been proposed. At present, Internet of things devices in IoT technologies such as NB-IOT and MTC are mainly aimed at low-rate and high-latency scenarios. In low-rate and high-latency scenarios, an IoT device usually meets the requirements of low cost, low complexity, a certain degree of coverage enhancement and power enhancement etc. Based on this, it is proposed to further design a new IoT technology in 5G NR to cover such requirements of medium IoT devices. The capabilities of terminal devices supporting such services are lower than that of those supporting eMBB, such as reduced bandwidth supported, relaxed processing time, reduced number of antennas, etc. Such system is the NR-light system.

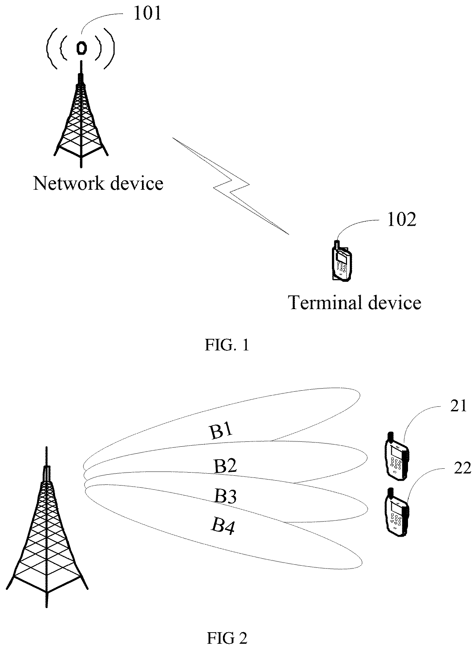

Next, with reference to FIG. 1, a scenario to which the method in this application is applicable will be described.

FIG. 1 is a schematic diagram of an application scenario provided by an embodiment of the present application. Please refer to FIG. 1, a network device 101 and a terminal device 102 are included, wireless communications can be performed between the network device 101 and the terminal device 102.

The network including the network device 101 and the terminal device 102 may also be referred to as a non-terrestrial network (Non-Terrestrial Network, NTN), where the NTN refers to a communication network between a terminal device and a satellite (also referred to as a network device).

It can be understood that, the technical solutions of the embodiments of the present application can be applied into NR communication technologies, where NR refers to a new generation of wireless access network technology, and can be applied to future evolutionary networks, such as the future 5th generation mobile communication (the 5th Generation Mobile Communication, 5G) system. The solutions in the embodiments of the present application can also be applied to other wireless communication networks such as wireless fidelity (Wireless Fidelity, WIFI) and long term evolution (Long Term Evolution, LTE), and the corresponding names may also use the corresponding names of the functions in other wireless communication networks to be replaced.

The network architecture and service scenarios described in the embodiments of the present application are for the purpose of illustrating the technical solutions of the embodiments of the present application more clearly, and do not constitute a limitation on the technical solutions provided by the embodiments of the present application. Those ordinary skilled in this art can be acknowledged that, as the evolution of the network architecture and the emergence of new service scenarios, the technical solutions provided by the embodiments of the present application are also suitable for similar technical problems.

Next related background of the present application will be illustrated.

FIG. 2 is a schematic diagram of sending wireless signals through beams provided by an embodiment of the present application, as shown in FIG. 2, in 5G system, since a used frequency band is higher than that of the LTE system, path loss of wireless signal transmission is larger, which leads the coverage of wireless signal becoming getting reduced. Therefore, a beam-forming technology can be used to form beams to improve the gain of wireless signals to make up for the path loss in a wireless signal transmission. For example, in FIG. 2, the network device can transmit signals through four beams in different directions, and the four beams are beam B1, beam B2, beam B3 and beam B4 respectively.

Due to the directivity of the beam, a narrow beam can only cover some areas, but not all areas. As shown in FIG. 2, the beam B2 can only cover a terminal device 21, but cannot cover a terminal device 22, and the beam B3 can only cover the terminal device 22, but cannot cover the terminal device 21, and so on.

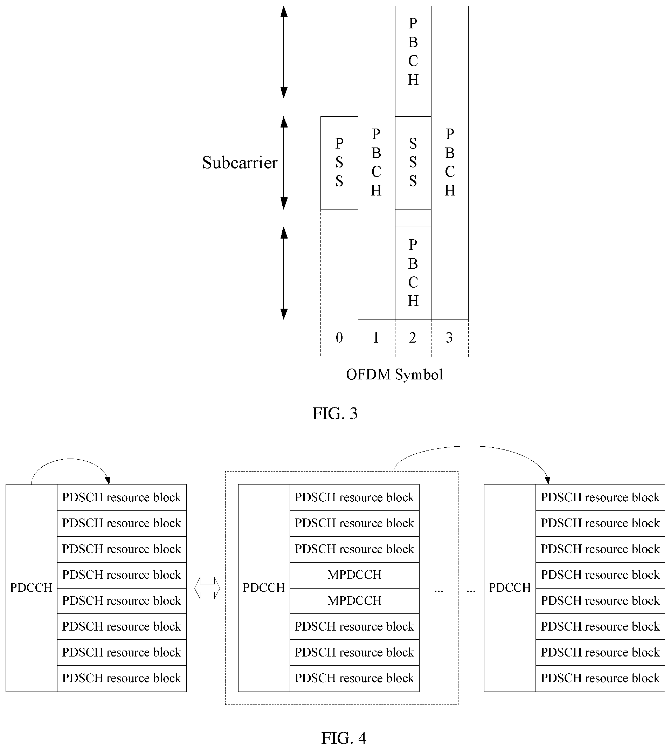

In NR system, each synchronization signal/physical broadcast channel block (synchronization signal/physical broadcast channel block, SSB) includes a primary synchronization signal (primary synchronization signal, PSS), a secondary synchronization signal (secondary synchronization signal, SSS), a PBCH and a demodulation reference signal (demodulation reference signal, DMRS) corresponding to the PBCH. FIG. 3 is a schematic diagram of a SSB provided by an embodiment of the present application, as shown in FIG. 3, one SSB includes one symbol of the PSS, one symbol of the SSS and two symbols of the PBCH, where in time-frequency resource occupied by the PBCH, the DMRS is included to be used to the demodulation of the PBCH.

Public channel and signal in 5G system, such as a synchronization signal (synchronization signal, SS) and a broadcast channel, need to cover the entire cell by means of multi-beam scanning, which is convenient for UEs in the cell to receive. The multi-beam transmission of the synchronization signal is realized by defining the SS/PBCH burst set (SS/PBCH burst set). The SS/PBCH burst set contains one or more SSBs, each SSB corresponds to a beam direction or a port, and one SSB is used to carry the synchronization signal and broadcast channel of one beam. Therefore, one SS/PBCH burst set can include synchronization signal of the SSB number of beams in a cell. In different frequency band ranges, a maximum number of the SSBs included in the SS/PBCH burst set is different, for example, the number L of the SSBs can be determined according to the frequency band of the system: for the frequency band below 3GHz, L=4; for the frequency band from 3GHz to 6GHz, L=8; for the frequency band from 6GHz to 52.6GHz, L=64.

All SSBs in the SS/PBCH burst set are sent within a time window of 5ms, and are sent repeatedly at a certain period. The period is configured by a high-level parameter SSB-timing, which can be 5ms, 10ms, 20ms, 40ms, 80ms, 160ms, etc. For the UE, the index (index) of the SSB is obtained through the received SSB, the value range of the index of the SSB is [0, L-1], and L is the maximum number of the SSBs corresponding to the frequency band. The SSB index corresponds to a relative position of the SSB within the 5ms time window, and the UE acquires frame synchronization according to the information and a half-frame instruction carried in the PBCH. The index of the SSB is indicated through the DMRS of the PBCH or information carried by the PBCH.

In NR system, the system information is divided into minimum system information and other system information. The minimum system information is divided into a master information block (master information block, MIB) carried on the PBCH and a system information block 1 (system information block 1, SIB 1) carried on the physical downlink shared channel. The MIB is used to provide basic system parameters of a cell, and the SIB 1 is used to provide configuration information related to initial access. In addition that the PBCH of the synchronization signal needs to perform multi-beam scanning, SIB 1, paging, etc., also needs to be sent by means of multi-beam scanning. For the cell that supports the initial access of the UE, the PBCH needs to provide a resource configuration of the PDCCH, including configuration information of the CORESET and a PDCCH search space, and the multiplexing mode of the SSB and the CORESET. The CORESET configuration information includes a frequency band occupied by the PDCCH in the frequency domain and a number of symbols occupied in the time domain, and the search space configuration information includes a starting symbol of the PDCCH and a monitoring period of the PDCCH.

At present, a PDCCH-ConfigSIB 1 information domain in the MIB information carried in the PBCH includes CORESET#0 information and Searchspace#0 information of the type 0 PDCCH. The CORESET#0 information is used to indicate resource block (resource block, RB) of the type 0 PDCCH in a frequency domain and symbols in a time domain, the Searchspace#0 information is used to determine a monitoring occasion of the type0 PDCCH.

Table 1 shows how to obtain the corresponding number of RBs and number of symbols, and the RB offset relative to the SSB according to the CORESET#0 information. As shown in Table 1, when the subcarrier spacing is 15 kHz, the bandwidth of CORESET#0 can be configured as 24, 48, and 96 RBs. In Table 1, the CORESET#0 information indicates one of the indexes (index) in Table 1, and according to the index, the corresponding number of RBs and number of symbols, and the RB offset relative to the SSB are obtained. Table 1 shows a total of 16 indexes from 0 to 15, four bits can be used to store the indexes, and then corresponding information can be obtained according to the indexes in the CORESET#0 information.

Table 1

| Index (index) | Multiplexing pattern of SSB and CORESET (pattern) | Number of RBs $N_{RB}^{CORESET}$ | Number of symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

The monitoring occasion of the type0 PDCCH is determined in the following manner, for that the multiplexing pattern of the SSB and the CORESET is pattern 1, the UE monitors a type0-PDCCH common search space in two continuous slots. The index of a starting slot in the two continuous slots is $n_0$. Each SSB whose index is i corresponds to a monitoring occasion, and the index $n_0$ of the starting slot of the monitoring occasion is determined through the following formula:

$$n_0 = (O \cdot 2^\mu + \lfloor i \cdot M \rfloor) \bmod N_{slot}^{frame,\mu}$$

where, $N_{slot}^{frame,\mu}$ is a number of slots in a radio frame, parameter M and parameter O are indicated by the Searchspace#0 information in the PBCH, the value set of the parameter O in the frequency domain below 6 GHz (frequency band range 1) is {0, 2, 5, 7}, the value set of the parameter O in the frequency domain above 6 GHz (frequency band range 2) is {0, 2.5, 5, 7.5}. The value of the parameter M includes {1/2, 1, 2}. $\mu \in \{0,1,2,3\}$, The values of $\mu$ are related with the subcarrier spacing of a PDCCH $\Delta f$, $\Delta f = 2^\mu \cdot 15[kHz]$.

After an index of a slot $n_0$ is determined, an index of a radio frame $SFN_C$ where the monitoring occasion is located is further determined, where:

when $\left\lfloor (O \cdot 2^\mu + \lfloor i \cdot M \rfloor) / N_{slot}^{frame,\mu} \right\rfloor \bmod 2 = 0$ , $SFN_C \bmod 2 = 0$ , when $\left\lfloor (O \cdot 2^\mu + \lfloor i \cdot M \rfloor) / N_{slot}^{frame,\mu} \right\rfloor \bmod 2 = 1$

, $SFN_C \bmod 2 = 1$. That is, when the number of slots obtained by calculating according to $(O \cdot 2^\mu + \lfloor i \cdot M \rfloor)$ is smaller than the number of slots included in a radio frame, $SFN_C$ is an even radio frame, and when the number of slots obtained by calculating according to $(O \cdot 2^\mu + \lfloor i \cdot M \rfloor)$ is greater than the number of slots included in a radio frame, $SFN_C$ is an odd radio frame.

Table 2 shows parameters of the PDCCH monitoring occasion of type 0-PDCCH common search space when the multiplexing pattern of the SSB and the CORESET is pattern 1 and the frequency domain is at frequency band range 1 and frequency band range 2.

Table 2

| Index | Frequency band range 1 | | | | Frequency band range 2 | | | |
|---|---|---|---|---|---|---|---|---|
| | O | Index of search space sets (per slot) | M | Index of first symbol | O | Index of search space sets (per slot) | M | Index of first symbol |
| 0 | 0 | 1 | 1 | 0 | 0 | 1 | 1 | 0 |
| 1 | 0 | 2 | 1/2 | 0 (i is an even number), $N_{symb}^{CORESET}$ (i symb is an odd number) | 0 | 2 | 1/2 | 0 (i is an even number), 7 (i is an odd number) |
| 2 | 2 | 1 | 1 | 0 | 2.5 | 1 | 1 | 0 |
| 3 | 2 | 2 | 1/2 | 0 (i is an even number), $N_{symb}^{CORESET}$ (i symb is an odd number) | 2.5 | 2 | 1/2 | 0 (i is an even number), 7 (i is an odd number) |
| 4 | 5 | 1 | 1 | 0 | 5 | 1 | 1 | 0 |
| 5 | 5 | 2 | 1/2 | 0 (i is an even number), $N_{symb}^{CORESET}$ (i symb is an odd number) | 5 | 2 | 1/2 | 0 (i is an even number), 7 (i is an odd number) |
| 6 | 7 | 1 | 1 | 0 | 0 | 2 | 1/2 | 0 (i is an even number), $N_{symb}^{CORESET}$ (i symb is an odd number) |
| 7 | 7 | 2 | 1/2 | 0 (i is an even number), $N_{symb}^{CORESET}$ (i symb is an odd number) | 2.5 | 2 | 1/2 | 0 (i is an even number), $N_{symb}^{CORESET}$ (i symb is an odd number) |
| 8 | 0 | 1 | 2 | 0 | 5 | 2 | 1/2 | 0 (i is an even number), $N_{symb}^{CORESET}$ (i symb is an odd number) |
| 9 | 5 | 1 | 2 | 0 | 7.5 | 1 | 1 | 0 |
| 10 | 0 | 1 | 1 | 1 | 7.5 | 1/2 | 1/2 | 0 (i is an even number), 7 (i is an odd number) |
| 11 | 0 | 1 | 1 | 2 | 7.5 | 1/2 | 1/2 | 0 (i is an even number), $N_{symb}^{CORESET}$ (i symb is an odd number) |
| 12 | 2 | 1 | 1 | 1 | 0 | 2 | 2 | 0 |
| 13 | 2 | 1 | 1 | 2 | 5 | 2 | 2 | 0 |
| 14 | 5 | 1 | 1 | 1 | Reserved | | | |
| 15 | 5 | 1 | 1 | 2 | Reserved | | | |

According to the CORESET#0 information and the Searchspace#0 information of the type 0 PDCCH carried in the PBCH, and in combination with table 1 and table 2, that is the information can be used to determine the slot distribution of the monitoring occasion of the type 0 PDCCH.

In the LTE MTC system, in order to reduce the receiving bandwidth of the terminal device to reduce cost and complexity, MPDCCH (MTC PDCCH) is introduced, and the resource carrying the MPDCCH includes a maximum of 6 physical resource blocks (physical resource block, PRB) in the frequency domain.

The MPDCCH is similar to EPDCCH (Enhanced PDCCH) in LTE, and the resources occupied by it are frequency-division multiplexed with PDSCH. FIG. 4 is a schematic diagram of PDSCH scheduling provided by an embodiment of the present application, as shown in FIG. 4, for the PDSCH scheduled by the PDCCH, the PDCCH is in a control area, in first few symbols of a subframe. For the PDSCH scheduled by the MPDCCH, the MPDCCH is within a narrowband frequency-divided with the PDSCH, the MPDCCH supports repetition in multiple subframes, MPDCCHs of different subframes can be frequency hopping, that is the MPDCCHs of different subframes are at different narrowbands. The MPDCCH and the PDSCH scheduled by it may not be in the same narrowband, downlink control information (downlink control information, DCI) carried in the MPDCCH can indicate a narrowband where the PDSCH is located.

In LTE system, in order to reduce the receiving bandwidth of the terminal device, MPDCCH (MTC PDCCH) is introduced, and after the frequency domain bandwidth carrying the MPDCCH is reduced, in order to improve the transmission reliability and coverage of the control channel, a transmission of the MPDCCH introduces frequency hopping and repetition, the frequency hopping can improve transmission performance through frequency diversity, the repetition can enable the terminal device combine multiple transmissions of the MPDCCH, thereby improving repetition performance. The NR-light system is also proposed for a terminal device supporting a reduced bandwidth, similarly, after the bandwidth of the PDCCH is reduced, the transmission performance of the PDCCH can also be improved through the repetitive transmission for the PDCCH.

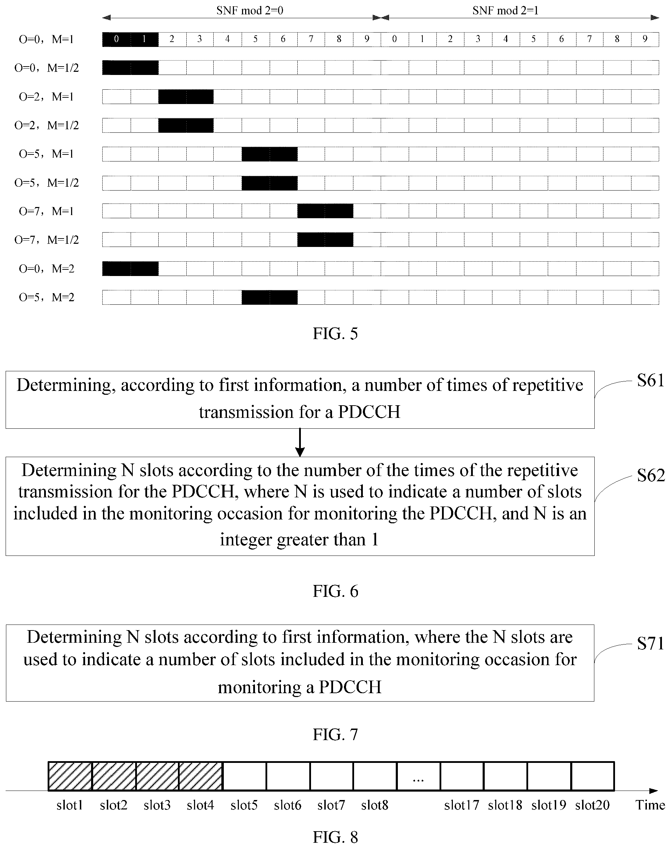

Firstly, the transmission of the current PDCCH is introduced. FIG. 5 is a schematic diagram of the distribution of the slots included in a monitoring occasion of the PDCCH provided by an embodiment of the present application, taking the type 0 PDCCH as an example, as shown in FIG. 5, currently, two continuous slots are included in the monitoring occasion of the type 0-PDCCH. For an associated SSB index, a terminal device can monitor the type 0 PDCCH in these two slots at most. The CORESETs of the type 0 PDCCHs corresponding to the SSBs with different indexes are the same, and the search space of the type 0 PDCCH is determined according to the index of the SSB and parameters O and M, where, the index of the SSB is the index i of an exemplary SSB in Table 2.

FIG. 5 shows that in a case of the subcarrier spacing is 15 kHz and L=8, when the parameters O and M take different values, for the distribution of slots included in the monitoring occasion of the type 0 PDCCH corresponding to the SSB whose SSB index is 0, the radio frame where a monitoring occasion is located is an even-numbered radio frame. The slots included in the monitoring occasion of the type 0 PDCCH corresponding to the SSBs of other indexes are offset according to the indexes of the SSBs.

As can be seen from FIG. 5, the monitoring occasion of the type 0-PDCCH includes two continuous slots, and for one monitoring occasion of the PDCCH, the terminal device can only monitor the PDCCH on these two slots. However, in NR-light system, due to the reduced bandwidth supported by the terminal device, the bandwidth of the CORESET of the PDCCH is limited, and it needs to repeatedly transmit the PDCCH in the time domain to ensure the transmission performance of the PDCCH. And the slot distribution included in the current monitoring occasion cannot meet the requirement of the repetitive transmission for the PDCCH. Based on this, the embodiments of the present application provide a determination solution of the monitoring occasion, which solves the problem that the slot distribution included in the current monitoring occasion cannot meet the requirement of the repetitive transmission for the PDCCH.

On the basis of content introduced above, the method for determining a monitoring occasion provided by the present application will be described in the following. FIG. 6 is a schematic first flowchart of a method for determining a monitoring occasion provided by an embodiment of the present application, as shown FIG. 6, the method may include:

S61, determining, according to first information, a number of times of repetitive transmission for a PDCCH;
S62, determining N slots according to the number of the times of the repetitive transmission for the PDCCH, where N is used to indicate a number of slots included in the monitoring occasion for monitoring PDCCH, and N is an integer greater than 1.

In the embodiments of the present application, the number of the times of the repetitive transmission for the PDCCH is firstly determined, then the N slots are determined according to the number of the times of the repetitive transmission for the PDCCH, where N is the number of the slots included in the monitoring occasion for monitoring the PDCCH. The number of the times of the repetitive transmission for PDCCH is determined according to the first information, where there are many possibilities for the first information, e.g. the first information is a preset number of the times of the repetitive transmission for the PDCCH, e.g. the first information may be various indication information, indicating the number of the times of the repetitive transmission for the PDCCH, etc. The terminal device can monitor the PDCCH in the PDCCH search space, and the PDCCH search space has corresponding configuration information, where the configuration information includes the period of the search space. The number of the slots included in the monitoring occasion in the embodiment of the present application refers to a number of slots for monitoring the PDCCH within each period of the search space. For example, when the period of the PDCCH search space is 20 slots, one PDCCH search space is configured every 20 slots, and the terminal device can monitor the PDCCH on the search space, so as to acquire the PDCCH. After N is determined, the terminal device can monitor the PDCCH on the N slots in the 20 slots within one period, where the N slots may be N continuous slots or N discontinuous slots.

The method for determining the monitoring occasion provided by the embodiment of the present application, firstly determines the number of the times of the repetitive transmission for the PDCCH according to the first information, then determines the N slots according to the number of the times of the repetitive transmission for the PDCCH, where N is an integer greater than 1. The terminal device can monitor the repeatedly transmitted PDCCH in the N slots of the monitoring occasion of the PDCCH, thereby a requirement of the repetitive transmission for the PDCCHs can be met, and the performance of the PDCCH transmission can be improved.

FIG. 7 is a schematic a second flowchart 2 of a method for determining a monitoring occasion provided by an embodiment of the present application, as shown in FIG. 7, the method may include:

S71, determining N slots according to first information, where the N slots are used to indicate slots included in the monitoring occasion for monitoring a PDCCH, N is an integer greater than 1, and the first information includes at least one of following information:

first indication information, a frequency band;
or, the first information is a preset number of slots included in the monitoring occasion of the PDCCH.

In the embodiments of the present application, the N slots are determined according to the first information, the N slots are slots included in the monitoring occasion of the PDCCH, the monitoring occasion of the PDCCH has the same meaning as the monitoring occasion in the exemplary embodiment of FIG. 6. In the embodiments of the present application, there are various possible implementations for the first information, for example, the first information may include at least one of first indication information and a frequency band, the value of N is indicated by the first indication information, or the value of N is indicated by the frequency band, etc. The frequency band refers to a frequency band over which a terminal device and a network device perform communication. The method for determining the N slots by the first indication information may be that, there is corresponding relationship between the first indication information and the number of slots included in the monitoring occasion of the PDCCH, where the specific corresponding relationship between the first indication information and the number of slots included in the monitoring occasion of the PDCCH may be determined according to specific content of the first indication information, which is not limited here. When the first indication information has been obtained, the value of N can be obtained by the corresponding relationship between the first indication information and the number of slots included in the monitoring occasion of the PDCCH. Similarly, a method for determining the N slots according to the frequency band may be that, there is corresponding relationship between the frequency band and the number of slots included in the monitoring occasion of the PDCCH, at this time, the value of N is bound to the frequency band. Each frequency band has a corresponding value of N, the values of N corresponding to different frequency bands may be the same, or different. When a frequency band between the terminal device and the network device has been obtained, the corresponding value of N can be obtained by the corresponding relationship between the frequency band and the number of slots included in the monitoring occasion of the PDCCH.

In addition to obtaining N according to the first indication information or the frequency band, in the embodiments of the present application, the first information may also be a preset number of slots included in the monitoring occasion of the PDCCH, that is, the value of N is the preset number. In this implementation, the value of N can be predefined as a preset number, and the preset number is an integer greater than 1, for example, when the preset number is 5, and the number of slots included in the monitoring occasion of the PDCCH is 5, then the terminal device can monitor the repeatedly transmitted PDCCH in 5 slots in the PDCCH search space.

The method for determining a monitoring occasion provided by the embodiments of the present application, determines the N slots according to the first information, where the first information may include the first indication information or the frequency band, the value of N is obtained through the first indication information or the frequency band, the first information may also be a preset number of slots included in the monitoring occasion of the PDCCH, which directly predefines the value of N is the preset number. The terminal device can monitor the repeatedly transmitted PDCCH in the N slots of the monitoring occasion of PDCCH, thereby the requirement of the repetitive transmission for the PDCCH can be met, and the performance of PDCCH transmission can be improved.

Next, in combination with a specific embodiment, a method for determining the number of the times of the repetitive transmission for the PDCCH according to the first information, or determining the N slots according to the first information will be introduced. FIG. 8 is a schematic diagram of a monitoring occasion of the PDCCH provided by an embodiment of the present application, as shown in FIG. 8, where a period indicated according to the PDCCH search space is 20 slots, one monitoring occasion of the PDCCH corresponds to each period. Within each monitoring occasion of the PDCCH, the N slots are determined, a network device can send repeatedly transmitted PDCCH on the N slots to a terminal device, the terminal device can monitor the repeatedly transmitted PDCCH on the N slots. For example, FIG. 8 illustrates the monitoring occasion of the PDCCH, where N=4, and the determined N slots are slot1-slot4, so the terminal device can monitor the repeatedly transmitted PDCCH in slot1-slot4.

Optionally, there are several possible cases for the first information, where, in a following embodiment, the number of the times of the repetitive transmission for the PDCCH can be obtained according to the first information, then N is obtained according to the number of the times of the repetitive transmission for the PDCCH, and N can also be obtained according to the first information; the several possible cases will be introduced respectively in the following.

Case 1, the first information is a preset number of times of repetitive transmission for the PDCCH, or, the first information is a preset number of slots included in the monitoring occasion of the PDCCH.

In a possible implementation, the first information is the preset number of times of repetitive transmission for the PDCCH.

In this implementation, the number of the times of the repetitive transmission for the PDCCH is predetermined, the number of the times of the repetitive transmission for the PDCCH is the preset number of times. For example, the number of the times of the repetitive transmission for the PDCCH can be preset as 3 times, then, N is obtained according to the number of the times of the repetitive transmission for the PDCCH. Those skilled in this art can understand, it is merely an example that the number of the times of the repetitive transmission for the PDCCH is 3 times, and does not constitute a limitation on the number of the times of the repetitive transmission for the PDCCH. There is a fourth mapping relationship between N and the number of the times of the repetitive transmission for the PDCCH, after the number of the times of the repetitive transmission for the PDCCH is determined, N can be obtained according to the fourth mapping relationship between the number of the times of the repetitive transmission for the PDCCH and N. Further, the fourth mapping relationship between the number of the times of the repetitive transmission for the PDCCH and N may also has different types. For example, one possible mapping relationship is, N=K+1, where K is the number of the times of the repetitive transmission for the PDCCH, N is the number of the slots included in each monitoring occasion of the PDCCH. For another example, the mapping relationship between N and the number K of the times of the repetitive transmission for the PDCCH may also be N=K+2, N=K+3, etc., which will not be specifically limited by the embodiments of the present application.

Optionally, the number of the slots N included in each monitoring occasion of the PDCCH is greater than or equal to the number K of the times of the repetitive transmission for the PDCCH. When the number of the slots included in each monitoring occasion of the PDCCH is greater than or equal to the number of the times of the repetitive transmission for the PDCCH, the network device can send a PDCCH repeatedly transmitted in the N slots in each monitoring occasion to the terminal device, the terminal device can monitor the repeatedly transmitted PDCCH in the N slots in each monitoring occasion. Since the number of the slots included in each monitoring occasion of the PDCCH is greater than or equal to the number of the times of the repetitive transmission for the PDCCH, the solution provided by the embodiments of the present application can meet the requirement of repetitive transmission for the PDCCH.

In another possible implementation, the first information is a preset number of slots included in the monitoring occasion of the PDCCH.

In addition to determining the number of the slots included in the monitoring occasion of the PDCCH through the number of the times of the repetitive transmission for the PDCCH, in this implementation, the number N of the slots included in the monitoring occasion of the PDCCH may be determined directly, where N is a preset number, N is a predefined numerical value, and N is an integer greater than 1.

For example, the number of the slots included in each monitoring occasion of the PDCCH can be preset as a preset number, a value of the preset number is a positive integer, it may be a numerical value such as 3, 4, 5, 6, etc., the specific numerical value is not limited by the embodiments of the present application. When N has been determined to be a preset number, the terminal device can monitor the repeatedly transmitted PDCCH in the preset number of the slots.

In this embodiment, the number of the times of the repetitive transmission for the PDCCH may be 2 times, 3 times, 4 times, etc., optionally, N is greater than or equal to the number of the times of the repetitive transmission for the PDCCH, thereby the requirement of the repetitive transmission for the PDCCH is met.

Optionally, the N slots included in each monitoring occasion of the PDCCH may be N continuous slots or N discontinuous slots, that is the terminal device can monitor the repeatedly transmitted PDCCH on the N continuous slots, or monitor the repeatedly transmitted PDCCH on the N discontinuous slots.

Optionally, in an embodiment corresponds to the above Case 1, the N slots are slots included in the monitoring occasion of the PDCCH in the PDCCH search space, where when the number of the times of the repetitive transmission for the PDCCH is a preset number of times, then the N slots are determined by the preset times, and N is the preset number, the corresponding PDCCH search space is a common search space or a specific search space of the terminal device.

Case 2, the first information includes a frequency band. When the first information includes a frequency band, the number of the times of the repetitive transmission for the PDCCH can be obtained through the first information, then the N slots are determined according to the number of the times of the repetitive transmission for the PDCCH, and the N slots can also be determined directly through the first information, which will be described in detail in the following.

In a possible implementation, the first information includes the frequency band, the frequency band in the embodiments of the present application refers to a frequency band over which the terminal device and the network device perform communication, or a frequency band where the terminal device and the network device work.

When it is required to obtain the number K of times of the repetitive transmission for the PDCCH according to the first information, the frequency band over which the terminal device and the network device performs communication can be acquired. For example, a current frequency band where the NR system operates may be divided into multiple frequency bands such as n1, n2, n3, ..., n79, etc., a location of the SSB is defined on each frequency band for the terminal device performing a cell search and an access. The manner for acquiring the frequency band over which the terminal device and the network device perform communication can be that, when the terminal device is going to perform a random access, a cell search can be performed in the corresponding frequency band. After the corresponding SSB has been searched, the frequency band over which the terminal device and the network device perform communication can be obtained.

Further, a first mapping relationship between a respective frequency band in the NR system and the number of the times of the repetitive transmission for the PDCCH can be set, each frequency band in NR system has its own corresponding value of the number K of the times of the repetitive transmission for the PDCCH, and the values of K corresponding to different frequency bands may be the same or different.

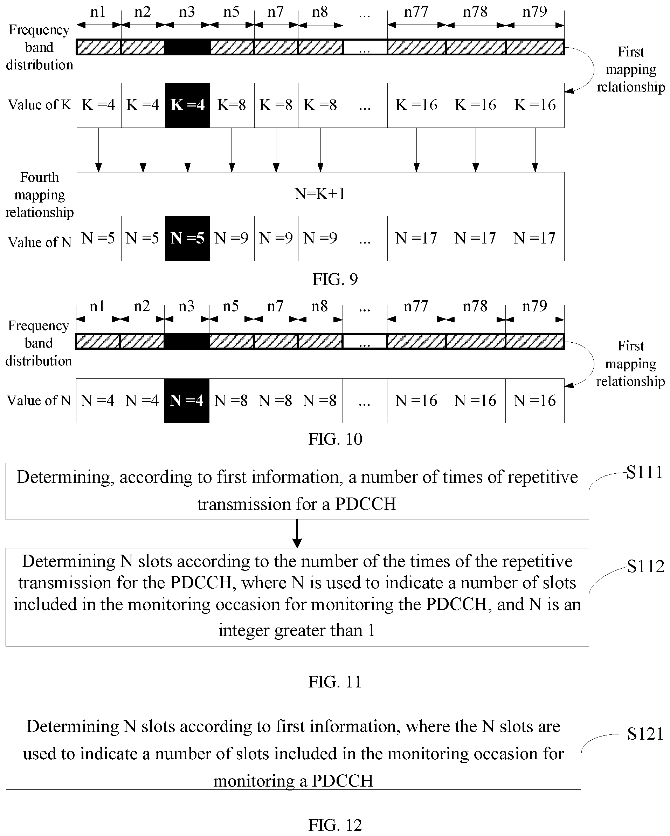

FIG. 9 is a schematic diagram of determining a number of times of repetitive transmission for the PDCCH according to a frequency band provided by an embodiment of the present application, as shown in FIG. 9, a frequency band of the NR system is divided into multiple frequency bands such as n1, n2, n3, ..., n79, etc., there is the first mapping relationship between the respective frequency band and the number K of the times of the repetitive transmission for the PDCCH, for example, the value of K corresponding to the frequency bands n1, n2 and n3 of the NR system is 4, the value of K corresponding to the frequency bands n5, n7 and n8 of the NR system is 8, the value of K corresponding to the frequency bands n77, n78 and n79 of the NR system is 16. If the frequency band over which the terminal device and the network device perform communication is the frequency band n3, according to the first mapping relationship between a frequency band distribution and K, the number K=4 of the times of the repetitive transmission for the PDCCH can be obtained. Further, there is a fourth mapping relationship between the number K of the times of the repetitive transmission for the PDCCH and the number N of the slots included in the monitoring occasion of the PDCCH, as shown in FIG. 9, taking the fourth mapping relationship is N=K+1 as an example, after K=4 is obtained, N=K+1=5 can be obtained according to the fourth mapping relationship, thereby the value of N is obtained according to the first information. When the frequency band between the terminal device and the network device is another frequency band, the manner by which N is determined is similar with this, and details are not repeated here.

Optionally, in addition to using respective frequency bands divided in NR system, the number K of the times of the repetitive transmission for the PDCCH may also be determined using the manner for dividing the frequency band range. For example, an optional manner is that, when the frequency band of communication between the terminal device and the network device is below 3 GHz, a corresponding number of times of the repetitive transmission for the PDCCH is 4; when the frequency band of communication between the terminal device and the network device is between 3 GHz-6 GHz, the corresponding number of the times of the repetitive transmission for the PDCCH is 8; when the frequency band of communication between the terminal device and the network device is between 6 GHz-52.6 GHz, the corresponding number of the times of the repetitive transmission for the PDCCH is 16, etc. Therefore, firstly the frequency band of communication between the terminal device and the network device can be acquired, then according to frequency band range corresponding to the frequency band, thereby the number of the times of the repetitive transmission for the PDCCH is obtained according to the first mapping relationship between the respective frequency band and the number K of the times of the respective transmission for the PDCCH.

After the number of the times of the repetitive transmission for the PDCCH is obtained, N is obtained according to the number of the times of the repetitive transmission for the PDCCH. There is a certain mapping relationship between N and the number of the times of the repetitive transmission for the PDCCH, after the number of the times of the repetitive transmission for the PDCCH is determined, N can be obtained according to the mapping relationship between the number of the times of the repetitive transmission for the PDCCH and N. The mapping relationship between the number of the times of the repetitive transmission for the PDCCH and N may also has various types. For example, one possible mapping relationship is, N=K+1, where K is the number of the times of the repetitive transmission for the PDCCH, N is the number of the slots included in each monitoring occasion of the PDCCH. For another example, the mapping relationship between N and the number of the times of the repetitive transmission for the PDCCH may also be N=K+2, N=K+3, etc., which will not be specifically limited by the embodiments of the present application.

In another possible implementation, the first information is the frequency band, N can be determined according to the first information.

The frequency band in the embodiments of the present application is similar to the frequency band in the above embodiments, both represent the frequency band over which the terminal device and the network device perform communication. Specific explanations may refer to the relevant parts of the above embodiments, which will not be repeated here.

The manner for determining N according to the frequency band over which the terminal device and the network device perform communication, is similar with the manner for determining the number K of times of the repetitive transmission for the PDCCH through the frequency band over which the terminal device and the network device perform communication in the above embodiments. For example, according to the current frequency band division of the NR system and the value of N corresponding to each frequency band, N can be determined. In the embodiments of the present application, the value of N is bound to the frequency band, and the corresponding N can be uniquely determined according to the frequency band. The manner for acquiring the frequency band over which the terminal device and the network device perform communication may refer to the above embodiments.

FIG. 10 is a schematic diagram of determining N according to a frequency band provided by an embodiment of the present application, as shown in FIG. 10, still taking the frequency band of the NR system is divided into multiple frequency bands such as n1, n2, n3, ..., n79, etc. as an example, there is the first mapping relationship between the respective frequency band and N, for example, the value of N corresponding to the frequency bands n1, n2 and n3 of the NR system is 4, the value of N corresponding to the frequency bands n5, n7 and n8 of the NR system is 8, the value of N corresponding to the frequency bands n77, n78 and n79 of the NR system is 16. If the frequency band over which the terminal device and the network device perform communication is the frequency band n3, according to the first mapping relationship between frequency band distribution and N, the number N=4 of the slots included in the monitoring occasion of the PDCCH can be obtained, thereby the value of N is obtained according to the first information. When the frequency band between the terminal device and the network device is another frequency band, the manner for determining N is similar with this, and will not be repeated here.

Optionally, the values of N corresponding to different frequency bands may be the same, or different. The first mapping relationship between the respective frequency band and N can be set. For example, N corresponding to the frequency band n1 obtained according to the first mapping relationship is 4, N corresponding to the frequency band n2 is 5, N corresponding to the frequency band n3 is 8, etc. If the terminal device performs communication with the network device within the frequency band n1, N obtained according to the first mapping relationship is 4, if the terminal device performs communication with the network device within the frequency band n2, N obtained according to the first mapping relationship is 5, etc.

Optionally, the number N of the slots included in each monitoring occasion of the PDCCH is greater than or equal to the number K of the times of the repetitive transmission for the PDCCH. When the number of the slots included in each monitoring occasion of the PDCCH is greater than or equal to the number of the times of the repetitive transmission for the PDCCH, the network device can send the PDCCH repeatedly transmitted in the N slots in each monitoring occasion to the terminal device, the terminal device can monitor the repeatedly transmitted PDCCH in the N slots in each monitoring occasion. Since the number of the slots included in each monitoring occasion of the PDCCH is greater than or equal to the number of the times of the repetitive transmission for the PDCCH, the solution provided by the embodiments of the present application can meet the requirement of the repetitive transmission for the PDCCH.

Optionally, the N slots included in each monitoring occasion of the PDCCH may be N continuous slots or N discontinuous slots, that is the terminal device can monitor the repeatedly transmitted PDCCH on the N continuous slots, or monitor the repeatedly transmitted PDCCH on the N discontinuous slots.

It should be noted that, the value of K or N and the division of frequency bands in the above embodiments are merely examples, and do not constitute a limitation on the specific value of K or N or the division of frequency bands.

Optionally, in the above embodiments corresponding to the Case 2, the N slots are the slots included in the monitoring occasion of the PDCCH in a PDCCH search space, where, the PDCCH search space is a common search space or a specific search space of a terminal device.

The embodiments of the present application can meet, by the manner that the frequency band over which the terminal device and the network device perform communication is bounded to K or N, the requirement of the repetitive transmission for the PDCCH can be met, the system design is simple, and the signaling is saved.

Case 3, the first information includes BWP bandwidth information of the terminal device in the first indication information.

In a possible implementation, the first information includes the BWP bandwidth information of the terminal device, the number of the times of the repetitive transmission for the PDCCH can be obtained through the BWP bandwidth information of the terminal device, then the N slots are determined according to the number of the times of the repetitive transmission for the PDCCH, or the N slots can be determined directly through the BWP bandwidth information of the terminal device, which will be described in detail in the following.

First, it is introduced that the number of the times of the repetitive transmission for the PDCCH is obtained through the BWP bandwidth information of the terminal device. In the embodiments of the present application, there is a second mapping relationship between a bandwidth indicated by the BWP bandwidth information of the terminal device and the number of the times of the repetitive transmission for the PDCCH, there is a one-to-one correspondence between the number K of the times of the repetitive transmission for the PDCCH and the bandwidth indicated by the BWP bandwidth information of the terminal device.

Optionally, the bandwidth indicated by a respective BWP bandwidth information can be divided, within different bandwidth ranges indicated by the BWP bandwidth information, there are respective corresponding values of the number K of the times of the repetitive transmission for the PDCCH, where the division of a bandwidth range indicated by the BWP bandwidth information can be determined according to actual needs, which will not be limited by the embodiments of the present application.

Before the number of the times of the repetitive transmission for the PDCCH is obtained according to the BWP bandwidth information of the terminal device, the BWP bandwidth information of the terminal device is needed to be obtained first. In the embodiments of the present application, the BWP bandwidth information of the terminal device may be initial downlink BWP bandwidth information, or may not be the initial downlink BWP bandwidth information. Depending on different BWP bandwidth information of the terminal device, the manner for acquiring the BWP bandwidth information of the terminal device is different.

When the BWP bandwidth information of the terminal device is the initial downlink BWP (initial downlink BWP) bandwidth information, one optional manner is that, the initial downlink BWP bandwidth information of the terminal device is obtained according to CORESET information carried in the PBCH, that is the bandwidth corresponding to the initial downlink BWP bandwidth information of the terminal device is a bandwidth indicated by a CORESET.

Another optional manner is that, the initial downlink BWP bandwidth information of the terminal device is obtained through a RRC signaling, that is, it is indicated by the BWP bandwidth information in the RRC signaling. For example, the bandwidth of the downlink BWP bandwidth information where the terminal device is located can be indicated by common configuration information DownlinkConfigCommon of a cell, a system message DownlinkConfigCommonSIB of the cell, and UE-specific cell configuration information ServingCellConfig etc.

When the BWP bandwidth information of the terminal device is not the initial downlink BWP bandwidth information, it also can be indicated through the BWP bandwidth information in the RRC signaling, a specific manner can refer to that the initial downlink BWP bandwidth information of the terminal device is indicated by the BWP bandwidth information in the RRC signaling, and details will not be repeated here.

Similarly, there is a fourth mapping relationship between N and the number of the times of the repetitive transmission for the PDCCH, after the number of the times of the repetitive transmission for the PDCCH is determined, N can be obtained according to the fourth mapping relationship between the number of the times of the repetitive transmission for the PDCCH and N. For the introduction of the fourth mapping relationship, reference may be made to the embodiments of the corresponding parts of the cases 1 and 2, and details will not be repeated here.

In another possible implementation, the first information is the BWP bandwidth information of the terminal device, N can be determined according to the first information.

In the embodiments of the present application, N can be determined directly according to the first information, where the first information is the BWP bandwidth information of the terminal device. The manner for determining N according to the BWP bandwidth information of the terminal device is similar with the manner for determining the number of the times of the repetitive transmission for the PDCCH according to the BWP bandwidth information of the terminal device.

In the embodiments of the present application, there is a second mapping relationship between the bandwidth indicated by the BWP bandwidth information of the terminal device and the number N of the slots included in the monitoring occasion of the PDCCH, that is there is a one-to-one correspondence between N and the bandwidth indicated by the BWP bandwidth information of the terminal device.

Optionally, the bandwidth indicated by the respective BWP bandwidth information can be divided, within different bandwidth ranges indicated by the BWP bandwidth information, there are respective corresponding values of N, where the division of the bandwidth range indicated by the BWP bandwidth information can be determined according to actual needs, which will not be limited by the embodiments of the present application.

Similar with the above embodiments, the BWP bandwidth information may be, or may not be initial downlink BWP bandwidth information of the terminal device. The initial downlink BWP bandwidth information of the terminal device can be obtained through CORESET information carried in the PBCH, or the initial downlink BWP bandwidth information of the terminal device can be obtained through the RRC signaling, for example, common configuration information DownlinkConfigCommon of a cell, a system message DownlinkConfigCommonSIB of the cell, and UE-specific cell configuration information ServingCellConfig etc. can be used to indicate the bandwidth of the downlink BWP bandwidth information where the terminal device is located. When the BWP bandwidth information of the terminal device is not the initial downlink BWP bandwidth information, it also can be indicated through the BWP bandwidth information in the RRC signaling, etc.

Optionally, the number N of the slots included in each monitoring occasion of the PDCCH is greater than or equal to the number K of the times of the repetitive transmission for the PDCCH. When the number of the slots included in each monitoring occasion of the PDCCH is greater than or equal to the number of the times of the repetitive transmission for the PDCCH, the network device can send the PDCCH repeatedly transmitted in the N slots in each monitoring occasion to the terminal device, the terminal device can monitor the repeatedly transmitted PDCCH in the N slots in each monitoring occasion. Since the number of the slots included in each monitoring occasion of the PDCCH is greater than or equal to the number of the times of the repetitive transmission for the PDCCH, the solution provided by the embodiments of the present application can meet the requirement of the repetitive transmission for the PDCCH.

Optionally, the N slots included in each monitoring occasion of the PDCCH may be N continuous slots or N discontinuous slots, that is the terminal device can monitor the repeatedly transmitted PDCCH on the N continuous slots, or monitor the repeatedly transmitted PDCCH on the N discontinuous slots. Optionally, in the above embodiment corresponds to the Case 3, the N slots are the slots included in the monitoring occasion of the PDCCH in the PDCCH search space, where the PDCCH search space is the common search space or the specific search space of the terminal device. Optionally, when the BWP bandwidth information of the terminal device is the initial downlink BWP bandwidth information obtained through the CORESET information carried in the PBCH, the PDCCH search space is the common search space; when the BWP bandwidth information of the terminal device is the initial downlink BWP bandwidth information of the terminal device obtained through the RRC signaling, or indicated by the BWP bandwidth information in the RRC signaling, the PDCCH search space is the common search space or the specific search space of the terminal device.

The embodiments of the present application can meet, by the manner that the BWP bandwidth information is bounded to K or N, the requirement of the repetitive transmission for the PDCCH, the system design is simple, and the signaling is saved.

Case 4, the first information includes indication information carried by the PBCH.

In a possible implementation, the first information includes the indication information carried by the PBCH, the number of the times of the repetitive transmission for the PDCCH can be obtained through the indication information carried by the PBCH, then the N slots are determined according to the number of the times of the repetitive transmission for the PDCCH, the N slots can also be determined directly through the indication information carried by the PBCH, which will be described in detail in the following.

First, it will be described that the number of the times of the repetitive transmission for the PDCCH is obtained according to the indication information carried by the PBCH. Specifically, the number of the times of the repetitive transmission for the PDCCH can be determined according to indication information of an information domain in a MIB carried by the PBCH. After the PBCH is received, the terminal device can obtain the number of the times of the repetitive transmission for the PDCCH according to the indication information carried by the PBCH, so as to obtain N.

The current MIB includes multiple information domains, in the embodiments of the present application, existing information domains can be reused to save signaling indications. The reused existing information domain may be redundant information after simplifying the design in NR-light system, this redundant information exists in both the NR system and the NR-light system. In the NR system, this information has a corresponding role, but the NR-light system is a simplified system compared to the NR system, less information needs to be indicated, and information bits or coded bits can be saved to indicate the number of the times of the repetitive transmission for the PDCCH. For example, subCarrierSpacingCommon, ssb-SubcarrierOffset, pdcch-ConfigSIB1, dmrs-TypeA-Position, intraFreqReselection, etc. in the NR-light system may be used to indicate the number of the times of the repetitive transmission for the PDCCH. Further, it can also be jointly coded with one or more of these information domains, or use a spare bit (spare BIT) to indicate the number of the times of the repetitive transmission for the PDCCH.

Optionally, the number of the times of the repetitive transmission for the PDCCH can be obtained according to a third mapping relationship between the indication information of the information domains in respective MIBs and the number of the times of the repetitive transmission for the PDCCH, and the indication information of the information domains in the MIB. The indication information of the information domain in the MIB may be CORESET information indicated by a CORESET information domain, or search space information indicated by a search space information domain.

In another possible implementation, the first information is the indication information carried by the PBCH, N can be determined according to the indication information carried by the PBCH. In the embodiments of the present application, N can be determined directly according to the first information, where the first information is the indication information carried by the PBCH. The manner for determining N through the indication information carried by the PBCH is similar with the manner for determining the number of the times of the repetitive transmission for the PDCCH through the indication information carried by the PBCH. For example, N can be determined through the indication information of the information domain in the MIB carried by the PBCH, the indication information of the information domain in the MIB may be the CORESET information indicated by the CORESET information domain, or the search space information indicated by the search space information domain. In the embodiments of the present application, there is a third mapping relationship between the indication information carried by the PBCH and the number N of the slots included in the monitoring occasion of the PDCCH.

Table 3 shows the method for obtaining the number of the times of the repetitive transmission for the PDCCH or N according to the CORESET information indicated by the CORESET information domain, as shown in table 3, where the CORESET information indicated by the CORESET information domain is an index (index) in table 3, each index corresponds to one number K of the times of the repetitive transmission for the PDCCH, or corresponds to the number N of the slots included in one monitoring occasion of the PDCCH.

Table 3

| Index | Multiplexing pattern of SSB and CORESET | Number of RBs | Number of symbols | Offset (RB) | K, or, N |
|---|---|---|---|---|---|
| 0 | 1 | 24 | 2 | 0 | 6 |
| 1 | 1 | 24 | 2 | 2 | 6 |
| 2 | 1 | 24 | 2 | 4 | 6 |
| 3 | 1 | 24 | 3 | 0 | 6 |
| 4 | 1 | 24 | 3 | 2 | 6 |
| 5 | 1 | 24 | 3 | 4 | 6 |
| 6 | 1 | 48 | 1 | 12 | 4 |
| 7 | 1 | 48 | 1 | 16 | 4 |
| 8 | 1 | 48 | 2 | 12 | 4 |
| 9 | 1 | 48 | 2 | 16 | 4 |
| 10 | 1 | 48 | 3 | 12 | 4 |
| 11 | 1 | 48 | 3 | 16 | 4 |
| 12 | 1 | 96 | 1 | 38 | 2 |
| 13 | 1 | 96 | 2 | 38 | 2 |
| 14 | 1 | 96 | 3 | 38 | 2 |
| 15 | Reserved | | | | |

What is shown in table 3 is the number K of the times of the repetitive transmission for the PDCCH or the number N of the slots included in the monitoring occasion of the PDCCH is indicated according to a number of RBs indicated by each CORESET information domain. In table 3, when the number of RBs is 24, the corresponding number K of the times of the repetitive transmission for the PDCCH or the corresponding number N of the slots included in the monitoring occasion of the PDCCH is 6; when the number of RBs is 48, the corresponding number K of the times of the repetitive transmission for the PDCCH or the corresponding number N of the slots included in the monitoring occasion of the PDCCH is 4; when the number of RBs is 96, the corresponding number K of the times of the repetitive transmission for the PDCCH or the corresponding number N of the slots included in the monitoring occasion of the PDCCH is 2. Optionally, K or N may also be indicated through other information indicated by the CORESET information domain.

According to table 3, and the CORESET information indicated by the CORESET information domain, K or N can be obtained. If what is obtained is the number K of the times of the repetitive transmission for the PDCCH, it needs to further obtain the value of N according to the fourth mapping relationship between the number K of the times of the repetitive transmission for the PDCCH and the number N of the slots included in the monitoring occasion of the PDCCH.

Table 4 shows the method for obtaining the number of the times of the repetitive transmission for the PDCCH or N according to the search space information indicated by the search space information domain, as shown in table 4, the search space information indicated by the search space information domain is the index in table 4, each index corresponds to one number K of the times of the repetitive transmission for the PDCCH, or one number N of the slots included in the monitoring occasion of the PDCCH. For example, one possible implementation is that, according to the value of a parameter O or a parameter M, or according to a value combination of the parameter O and the parameter M, the number K of the times of one repetitive transmission for the PDCCH is corresponded, or one number N of slots included in one monitoring occasion of the PDCCH is corresponded. What is shown in table 4 is the number K of the times of the repetitive transmission for the PDCCH or the number N of the slots included in the monitoring occasion of the PDCCH is indicated according to a value of the parameter M indicated by each search space information domain. In table 4, when M=2, the corresponding number K of the times of the repetitive transmission for the PDCCH or the number N of the slots included in the monitoring occasion of the PDCCH is 6; when M=1, the corresponding number K of the times of the repetitive transmission for the PDCCH or the number N of the slots included in the monitoring occasion of the PDCCH is 4; when M=1/2, the corresponding number K of the times of the repetitive transmission for the PDCCH or the number N of the slots included in the monitoring occasion of the PDCCH is 2.

Similarly, according to table 4, and the search space information indicated by the search space information domain, K or N can be obtained. If what is obtained is the number K of the times of the repetitive transmission for the PDCCH, it needs to further obtain the value of N according to the fourth mapping relationship between the number K of the times of the repetitive transmission for the PDCCH and the number N of the slots included in the monitoring occasion of the PDCCH. The fourth mapping relationship between K and N may also has different types. For the specific fourth mapping relationship, reference may be made to the descriptions of the relevant parts in Case 1 and Case 2, and details will not be repeated here.

Table 4

| Index | O | Index of search space sets (per slot) | M | Number of first symbol | K, or, N |
|---|---|---|---|---|---|
| 0 | 0 | 1 | 1 | 0 | 4 |
| 1 | 0 | 2 | 1/2 | 0 (i is an even number), $N_{symb}^{CORESET}$ (i is an odd symb number) | 2 |
| 2 | 2 | 1 | 1 | 0 | 4 |
| 3 | 2 | 2 | 1/2 | 0 (i is an even number), $N_{symb}^{CORESET}$ (i is an odd symb number) | 2 |
| 4 | 5 | 1 | 1 | 0 | 4 |
| 5 | 5 | 2 | 1/2 | 0 (i is an even number), $N_{symb}^{CORESET}$ (i is an odd symb number) | 2 |
| 6 | 7 | 1 | 1 | 0 | 4 |
| 7 | 7 | 2 | 1/2 | 0 (i is an even number), $N_{symb}^{CORESET}$ (i is an odd symb number) | 2 |
| 8 | 0 | 1 | 2 | 0 | 6 |
| 9 | 5 | 1 | 2 | 0 | 6 |
| 10 | 0 | 1 | 1 | 1 | 4 |
| 11 | 0 | 1 | 1 | 2 | 4 |
| 12 | 2 | 1 | 1 | 1 | 4 |
| 13 | 2 | 1 | 1 | 2 | 4 |
| 14 | 5 | 1 | 1 | 1 | 4 |
| 15 | 5 | 1 | 1 | 2 | 4 |

Optionally, the number N of the slots included in each monitoring occasion of the PDCCH is greater than or equal to the number K of the times of the repetitive transmission for the PDCCH. When the number of the slots included in each monitoring occasion of the PDCCH is greater than or equal to the number of the times of the repetitive transmission for the PDCCH, the network device can send the PDCCH repeatedly transmitted in the N slots in each monitoring occasion to the terminal device, the terminal device can monitor the repeatedly transmitted PDCCH in the N slots in each monitoring occasion. Since the number of the slots included in each monitoring occasion of the PDCCH is greater than or equal to the number of the times of the repetitive transmission for the PDCCH, the solution provided by the embodiments of the present application can meet the requirement of the repetitive transmission for the PDCCH.

Optionally, the N slots included in each monitoring occasion of the PDCCH may be N continuous slots or N discontinuous slots, that is the terminal device can monitor the repeatedly transmitted PDCCH on the N continuous slots, or monitor the repeatedly transmitted PDCCH on the N discontinuous slots. Optionally, in the above embodiments corresponding to the Case 4, the N slots are slots included in the monitoring occasion of the PDCCH in the PDCCH search space, where the corresponding PDCCH search space is the specific search space of the terminal device. In the embodiments of the present application, the number of the times of the repetitive transmission for the PDCCH or the parameter N can be flexibly configured through the indication information carried by the PBCH, to improve the transmission performance of the PDCCH.

Case 5, the first information includes a number of times of repetitive transmission for a PDCCH configured in a RRC signaling and a number of slots included in each monitoring occasion in the PDCCH search space, the N slots can be determined through the number of the times of the repetitive transmission for the PDCCH configured in the RRC signaling and the number of the slots included in each monitoring occasion in the PDCCH search space, which will be described in detail in the following.

When the number of the times of the repetitive transmission for the PDCCH is greater than or equal to the number of the slots included in each monitoring occasion in the PDCCH search space, N equals to the number of the times of the repetitive transmission for the PDCCH; when the number of the times of the repetitive transmission for the PDCCH is smaller than the number of the slots included in each monitoring occasion in the PDCCH search space, N equals to the number of the slots included in each monitoring occasion in the PDCCH search space.

For a common search space such as type 0-PDCCH, type 0A-PDCCH, type 1-PDCCH, type 2-PDCCH, etc., it can be configured by a PDCCH-ConfigCommon signaling. The common search space of a type 0-PDCCH is configured through a searchSpaceZero and a searchSpaceSIB1, a common search space of a type 0A-PDCCH is configured through a searchSpaceOtherSystemInformation, a common search space of a type 1-PDCCH is configured through a ra-SearchSpace, a common search space of a type 2-PDCCH is configured through a pagingSearchSpace.

Other PDCCH common search spaces and UE specific search spaces inform a UE through the RRC signaling. Specifically, PDCCH monitoring of the terminal device is performed in the PDCCH search space, the PDCCH search space can be informed to the terminal device by the network device through the RRC signaling. The configuration information of the search space may include information in following table 5.

Table 5

| Parameter name | Function |
|---|---|
| search ID | Used to identify the corresponding search space configuration |
| controlResourceSetId | Used to indicate the ID of the CORESET to which it is bounded, to configure the time-frequency resource of the PDCCH search space |
| monitoringSlotPeriodicityAndOffset | Used to indicate the period of the search space and the offset within the period |
| Duration | Used to indicate the number of slots continuously monitored in the period of the PDCCH search space |
| monitoringSymbolsWithinSlot | Used to indicate a starting symbol of SearchSpace within the slot, to indicate on which symbols the PDCCH monitoring is performed within the slot of the PDCCH monitoring |
| PDCCH candidates | Used to indicate configuration information of a candidate control channel (PDCCH candidate) |
| Type of Search space | Indicating whether the PDCCH search space is a common search space or a specific search space of a terminal device |

The PDCCH search spaces configured by the network device for the terminal device all have corresponding configuration information.

In this embodiment, for the PDCCH search space configured through the RRC signaling, the number of the slots included in one monitoring occasion of the PDCCH is determined through information carried in the configuration of the search space and information of the number of the times of the repetitive transmission for the PDCCH. In essence, a Duration parameter in the configuration information of the earch space indicates the number of the slots included in one monitoring occasion of the PDCCH. However, in the NR-light system, due to the repetitive transmission for the PDCCH, the number of the slots included in one monitoring occasion of the PDCCH has a certain correlation with the number of the times of the repetitive transmission for the PDCCH.

Specifically, for example, a network configures information of a number of times of repetitive transmission for a certain PDCCH to the UE through the RRC signaling, when the number of the times of the repetitive transmission is greater than a number of slots indicated by the Duration in the configuration information of the search space, a number of slots included in one monitoring occasion of the PDCCH is the number of the times of the repetitive transmission for the PDCCH; when the number of the times of the repetitive transmission is smaller than or equal to the number of the slots indicated by the Duration in the configuration information of the search space, the number of slots included in one monitoring occasion is the number of the slots indicated by the Duration. For example, when the number of the times of the repetitive transmission for the PDCCH configured in the RRC signaling is 2 and the number of slots indicated by the Duration is 3, N can be equal to 3; when the number of the times of the repetitive transmission for the PDCCH configured in the RRC signaling is 3 and the number of slots indicated by the Duration is 2, N can be equal to 3. Specifically, the Duration in the configuration of the search space indicates the number of the slots included in one monitoring occasion of the PDCCH, the number of the slots implicitly indicates the number of the times of the repetitive transmission for the PDCCH, for example, being equal to the number of the slots, or being the number of the slots minus a constant. The UE obtains the number of the times of the repetitive transmission according to this manner, and receives the PDCCH on the corresponding slot.

Optionally, the N slots included in each monitoring occasion of the PDCCH may be N continuous slots or N discontinuous slots, that is the terminal device can monitor the repeatedly transmitted PDCCH on the N continuous slots, or monitor the repeatedly transmitted PDCCH on the N discontinuous slots. Optionally, in the above embodiments corresponding to the Case 5, the N slots are the slots included in the monitoring occasion of the PDCCH in the PDCCH search space, where the PDCCH search space is the common search space or the specific search space of the terminal device.

In the embodiments of the present application, the number N of the slots included in the monitoring occasion is determined through the number of the times of the repetitive transmission for the PDCCH configured in the RRC signaling and the number of the slots indicated by the parameter Duration in the configuration information of the search space, which can ensure the number of the slots meets the repetitive transmission for the PDCCH, and ensure the transmission performance of the PDCCH, can also save a signaling of the information of the number of the times of the repetitive transmission for the PDCCH.

Next a method for determining a monitoring occasion of a network device side will be introduced in combination with FIG. 11.

FIG. 11 is a schematic a third flowchart of a method for determining a monitoring occasion provided by an embodiment of the present application, as shown in FIG. 11, the method may include:

S111, determining, according to first information, a number of times of repetitive transmission for a PDCCH; and
S112, determining N slots according to the number of the times of the repetitive transmission for the PDCCH; where N is used to indicate a number of slots included in a monitoring occasion of a PDCCH, and N is an integer greater than 1.

The method for determining the monitoring occasion provided by the embodiment of the present application is applied in the network device, which firstly determines the number of the times of the repetitive transmission for the PDCCH according to the first information, then determines the N slots according to the number of the times of the repetitive transmission for the PDCCH, where N is the number of the slots included in the monitoring occasion of the PDCCH. After N is determined, the network device can send a PDCCH repeatedly transmitted in the N slots to the terminal device. Moreover, the implementation that, on the network device side, the number of the times of the repetitive transmission for the PDCCH is determined according to the first information, and further N is determined according to the number of the times of the repetitive transmission for the PDCCH is similar with the above implementation that the terminal device side determines the number of the times of the repetitive transmission for the PDCCH according to the first information, and then determines the N according to the number of the times of the repetitive transmission for the PDCCH; the specific implementation can refer to the introduction in the above embodiments, and details are not repeated here.

The embodiments of the present application firstly determines the number of the times of the repetitive transmission for the PDCCH according to the first information, then determines the N slots according to the number of the times of the repetitive transmission for the PDCCH. The network device can send the PDCCH repeatedly transmitted in the N slots of the monitoring occasion of the PDCCH to the terminal device, thereby the requirement of repetitive transmission for the PDCCH can be met, and the performance of the PDCCH transmission can be improved.

FIG. 12 is a schematic a fourth flowchart of a method for determining a monitoring occasion provided by an embodiment of the present application, as shown in FIG. 12, the method may include:
S121, determining N slots according to first information; where the N slots are used to indicate a number of slots included in a monitoring occasion of a PDCCH, N is an integer greater than 1, and first information includes at least one of following information:

first indication information, a frequency band; or, the first information is a preset number of slots included in the monitoring occasion of the PDCCH.

The method for determining the monitoring occasion provided by the embodiment of the present application is applied in the network device, which determines the number of the times of the repetitive transmission for the PDCCH according to the first information, where the first information may be the first indication information, the frequency band, or may be the preset number of the slots included in the monitoring occasion of the PDCCH; N is obtained through the first information, the network device can send a PDCCH repeatedly transmitted in the N slots to the terminal device, the requirement of the repetitive transmission for the PDCCH can be met, and the performance of PDCCH transmission can be improved. The implementation that, on the network device side, the N slots is determined according to the first information is similar with the above implementation that the terminal device side determines the N slots according to the first information; the specific implementation can refer to the introduction in the above embodiments, and details will not be repeated here.

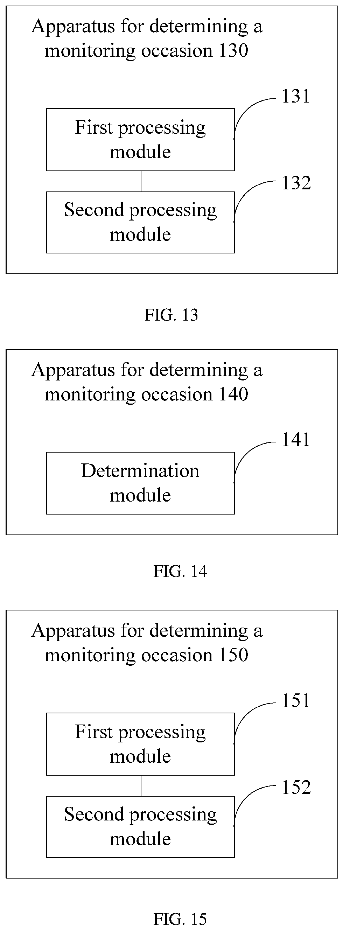

FIG. 13 is a first structural schematic diagram of an apparatus for determining a monitoring occasion provided by an embodiment of the present application, as shown in FIG. 13, the apparatus for determining the monitoring occasion 130 may include a first processing module 131 and a first processing module 132, where:

the first processing module 131 is configured to determine, according to first information, a number of times of repetitive transmission for a PDCCH;
the second processing module 132 is configured to determine N slots according to the number of the times of the repetitive transmission for the PDCCH, where N is used to indicate a number of slots included in a monitoring occasion for monitoring a PDCCH, and N is an integer greater than 1.

In a possible implementation, the N slots are slots included in the monitoring occasion of the PDCCH in a PDCCH search space.

In a possible implementation, N is greater than or equal to the number of the times of the repetitive transmission for the PDCCH.

In a possible implementation, the first information includes at least one of following information: first indication information; a frequency band.

In a possible implementation, the first indication information includes at least one of following information: bandwidth part BWP bandwidth information of a terminal device; indication information carried by the physical broadcast channel PBCH; a number of times of repetitive transmission for a PDCCH configured in a radio resource control RRC signaling and a number of slots included in each monitoring occasion in the PDCCH search space.

In a possible implementation, the first information is a preset number of times of repetitive transmission for the PDCCH.

In a possible implementation, when the first information includes the frequency band, the first processing module 131 is specifically configured to:
obtain, according to a first mapping relationship between the frequency band and the number of the times of the repetitive transmission for the PDCCH, the number of the times of the repetitive transmission for the PDCCH.

In a possible embodiment, when the first information includes the BWP bandwidth information of the terminal device, the first processing module 131 is specifically configured to:
obtain, according to a second mapping relationship between bandwidths indicated by respective BWP bandwidth information and the number of times of the PDCCH repeated transmission, and the bandwidth indicated by the BWP bandwidth information of the terminal device, the number of times of the PDCCH repeated transmission.

In a possible implementation, the BWP bandwidth information of the terminal device is BWP bandwidth information indicated by BWP configuration information in a RRC signaling.

In a possible implementation, the first information includes a number of times of repetitive transmission for a PDCCH configured in a RRC signaling and a number of slots included in each monitoring occasion in the PDCCH search space, where:

when the number of the times of the repetitive transmission for the PDCCH is greater than or equal to the number of the slots included in each monitoring occasion indication in the PDCCH search space, N is equal to the number of the times of the repetitive transmission for the PDCCH;
when the number of the times of the repetitive transmission for the PDCCH is smaller than the number of the slots included in each monitoring occasion indication in the PDCCH search space, N is equal to the number of the slots included in each monitoring occasion in the PDCCH search space.

In a possible implementation, the BWP bandwidth information of the terminal device is a bandwidth indicated by a control resource set CORESET carried in a PBCH.

In a possible implementation, the BWP bandwidth information is initial downlink BWP bandwidth information.

In a possible implementation, when the first information includes the indication information carried by a PBCH, the first processing module 131 is specifically configured to:

determine, according to indication information of an information domain in a master information block MIB carried by the PBCH, the number of the times of the repetitive transmission for the.

In a possible implementation, the first processing module 131 is specifically configured to:

obtain, according to a third mapping relationship between indication information of an information domain in a respective MIB and the number of the times of the repetitive transmission for the PDCCH, and the indication information of the information domain in the MIB, the number of the times of the repetitive transmission for the PDCCH.

In a possible implementation, the indication information of the information domain in the MIB is:

CORESET information indicated by a CORESET information domain, or, search space information indicated by a search space information domain.

In a possible implementation, the second processing module 132 is specifically configured to:

obtain N according to a fourth mapping relationship between the number of the times of the repetitive transmission for the PDCCH and the number of the slots included in the monitoring occasion of the PDCCH, and the number of the times of the repetitive transmission for the PDCCH.

In a possible implementation, the PDCCH search space is a common search space or a specific search space of a terminal device.

In a possible implementation, the PDCCH search space is a common search space.

The apparatus for determining a monitoring occasion provided in the embodiments of the present application may execute the technical solutions shown in the foregoing method embodiments, and the implementation principles and beneficial effects thereof are similar, and details are not repeated here.

FIG. 14 is a second structural schematic diagram of an apparatus for determining a monitoring occasion provided by an embodiment of the present application, as shown in FIG. 14, the apparatus for determining a monitoring occasion 140 may include a determination module 141, where:

the determination module 141 is configured to determine N slots according to first information, where the N slots are used to indicate a number of slots included in the monitoring occasion for monitoring a PDCCH, N is an integer greater than 1, and the first information includes at least one of following information:

first indication information, a frequency band;

or, the first information is a preset number of slots included in the monitoring occasion of the PDCCH.

In a possible implementation, the N slots are slots included in the monitoring occasion of the PDCCH in a PDCCH search space.

In a possible implementation, N is greater than or equal to a number of times of repetitive transmission for the PDCCH.

In a possible implementation, the first indication information is at least one of following information:

bandwidth part BWP bandwidth information of the terminal device; indication information carried by the physical broadcast channel PBCH; a number of times of repetitive transmission for a PDCCH configured in a radio resource control RRC signaling and a number of slots included in each monitoring occasion in the PDCCH search space.

In a possible implementation, when the first information includes the frequency band, the determination module 141 is specifically configured to:

obtain N according to a first mapping relationship between the frequency band and the number of slots included in the monitoring occasion.

In a possible implementation, when the first information includes the BWP bandwidth information of a terminal device, the determination module 141 is specifically configured to:

obtain N according to a second mapping relationship between a bandwidth indicated by respective BWP bandwidth information and the number of slots included in the monitoring occasion of the PDCCH, and a bandwidth indicated by the BWP bandwidth information of the terminal device.

In a possible implementation, the BWP bandwidth information of the terminal device is BWP bandwidth information indicated by BWP configuration information in a RRC signaling.

In a possible implementation, the first information includes a number of times of repetitive transmission for a PDCCH configured in a RRC signaling and a number of slots included in each monitoring occasion in the PDCCH search space; where:

when the number of the times of the repetitive transmission for the PDCCH is greater than or equal to the number of the slots included in each monitoring occasion indication in the PDCCH search space, N is equal to the number of the times of the repetitive transmission for the PDCCH;

when the number of the times of the repetitive transmission for the PDCCH is smaller than the number of the slots included in each monitoring occasion indication in the PDCCH search space, N is equal to the number of the slots included in each monitoring occasion in the PDCCH search space.

In a possible implementation, the BWP bandwidth information of the terminal device is a bandwidth indicated by a control resource set CORESET carried in the PBCH.

In a possible implementation, the BWP bandwidth information is initial downlink BWP bandwidth information.

In a possible implementation, when the first information includes indication information carried by a PBCH, the determination module 141 is specifically configured to:

determine the N slots according to indication information of an information domain in a master information block MIB carried by the PBCH.

In a possible implementation, the determination module 141 is specifically configured to:

obtain the N slots according to a third mapping relationship between the indication information of the information domain in the MIB and the number of slots included in the monitoring occasion of the PDCCH, and the indication information of the information domain in the MIB.

In a possible implementation, the indication information of the information domain in the MIB is:

CORESET information indicated by a CORESET information domain, or, search space information indicated by a search space information domain.

In a possible implementation, the PDCCH search space is a common search space or a specific search space of the terminal device.

In a possible implementation, the PDCCH search space is a common search space.

The apparatus for determining a monitoring occasion provided in the embodiments of the present application may execute the technical solutions shown in the foregoing method embodiments, and the implementation principles and beneficial effects thereof are similar, and details are not repeated here.

FIG. 15 is a third structural schematic diagram of an apparatus for determining a monitoring occasion provided by an embodiment of the present application, as shown in FIG. 15, the apparatus for determining a monitoring occasion may include a first processing module 151 and a second processing module 152, where:

the first processing module 151 is configured to determine, according to first information, a number of times of repetitive transmission for a PDCCH; and

the second processing module 152 is configured to determine N slots according to the number of the times of the repetitive transmission for the PDCCH, where N is used to indicate a number of slots included in the monitoring occasion of a PDCCH, and N is an integer greater than 1.

In a possible implementation, the N slots are slots included in the monitoring occasion of the PDCCH in a PDCCH search space.

In a possible implementation, N is greater than or equal to the number of the times of the repetitive transmission for the PDCCH.

In a possible implementation, the first information includes at least one of following information:

first indication information; a frequency band.

In a possible implementation, the first indication information includes at least one of following information:

bandwidth part BWP bandwidth information of the terminal device; indication information carried by the physical broadcast channel PBCH; a number of times of repetitive transmission for the PDCCH configured in a radio resource control RRC signaling and a number of slots included in each monitoring occasion in the PDCCH search space.

In a possible implementation, the first information is a preset number of times of repetitive transmission for the PDCCH.

In a possible implementation, when the first information includes the frequency band, the first processing module 151 is specifically configured to:

obtain, according to a first mapping relationship between the frequency band and the number of the times of the repetitive transmission for the PDCCH, the number of the times of the repetitive transmission for the PDCCH.

In a possible implementation, when the first information includes the BWP bandwidth information of a terminal device, the first processing module 151 is specifically configured to:

obtain, according to a second mapping relationship between a bandwidth indicated by respective BWP bandwidth information and the number of the times of the repetitive transmission for the PDCCH, and a bandwidth indicated by the BWP bandwidth information of the terminal device, the number of the times of the repetitive transmission for the PDCCH.

In a possible implementation, the BWP bandwidth information of the terminal device is BWP bandwidth information indicated by BWP configuration information in a RRC signaling.

In a possible implementation, the first information includes a number of times of repetitive transmission for a PDCCH configured in a RRC signaling and a number of slots included in each monitoring occasion in the PDCCH search space; where:

when the number of the times of the repetitive transmission for the PDCCH is greater than or equal to the number of the slots included in each monitoring occasion indication in the PDCCH search space, N is equal to the number of the times of the repetitive transmission for the PDCCH;

when the number of the times of the repetitive transmission for the PDCCH is smaller than the number of the slots included in each monitoring occasion indication in the PDCCH search space, N is equal to the number of the slots included in each monitoring occasion in the PDCCH search space.

In a possible implementation, the BWP bandwidth information of the terminal device is a bandwidth indicated by a control resource set CORESET carried in the PBCH.

In a possible implementation, the BWP bandwidth information is initial downlink BWP bandwidth information.

In a possible implementation, when the first information includes the indication information carried by a PBCH, the first processing module 151 is specifically configured to:

determine, according to indication information of an information domain in a master information block MIB carried by the PBCH, the number of the times of the repetitive transmission for the PDCCH.

In a possible implementation, the first processing module 151 is specifically configured to:

obtain, according to a third mapping relationship between indication information of an information domain in a respective MIB and the number of the times of the repetitive transmission for the PDCCH, and the indication information of the information domain in the MIB, the number of the times of the repetitive transmission for the PDCCH.

In a possible implementation, the indication information of the information domain in the MIB is:

CORESET information indicated by a CORESET information domain, or, search space information indicated by a search space information domain.

In a possible implementation, the second processing module 152 is specifically configured to:

obtain N according to a fourth mapping relationship between the number of the times of the repetitive transmission for the PDCCH and the number of the slots included in the monitoring occasion of the PDCCH, and the number of the times of the repetitive transmission for the PDCCH.

In a possible implementation, the PDCCH search space is a common search space or a specific search space of the terminal device.

In a possible implementation, the PDCCH search space is a common search space.

The apparatus for determining a monitoring occasion provided in the embodiments of the present application may execute the technical solutions shown in the foregoing method embodiments, and the implementation principles and beneficial effects thereof are similar, and details are not repeated here.

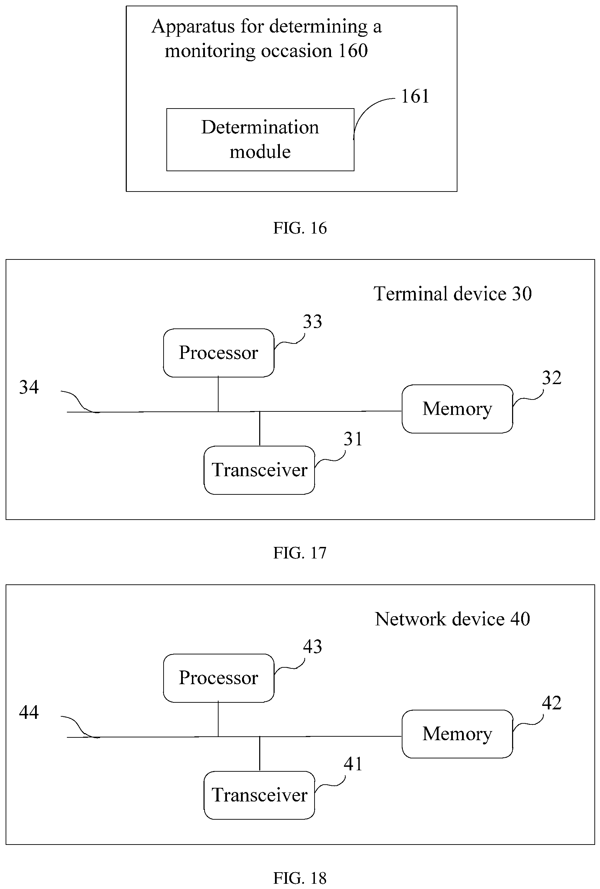

FIG. 16 is a fourth structural schematic diagram of an apparatus for determining a monitoring occasion provided by an embodiment of the present application, as shown in FIG. 16, the apparatus for determining a monitoring occasion 160 may include a determination module 161, where:

the determination module 161 is configured to determine N slots according to first information, where the N slots are used to indicate a number of slots included in the monitoring occasion of a PDCCH, N is an integer greater than 1, and the first information includes at least one of following information:

first indication information, a frequency band;

or, the first information is a preset number of slots included in the monitoring occasion of the PDCCH.

In a possible implementation, the N slots are slots included in the monitoring occasion of the PDCCH in a PDCCH search space.

In a possible implementation, N is greater than or equal to a number of times of repetitive transmission for the PDCCH.

In a possible implementation, the first indication information includes at least one of following information: bandwidth part BWP bandwidth information of a terminal device; indication information carried by the physical broadcast channel PBCH; a number of times of repetitive transmission for the PDCCH configured in a radio resource control RRC signaling and a number of slots included in each monitoring occasion in the PDCCH search space.

In a possible implementation, when the first information includes the frequency band, the determination module 161 is specifically configured to:

obtain N according to a first mapping relationship between the frequency band and the number of slots included in the monitoring occasion.

In a possible implementation, when the first information includes the BWP bandwidth information of a terminal device, the determination module 161 is specifically configured to:

obtain N according to a second mapping relationship between a bandwidth indicated by respective BWP bandwidth information and the number of slots included in the monitoring occasion of the PDCCH, and a bandwidth indicated by the BWP bandwidth information of the terminal device.

In a possible implementation, the BWP bandwidth information of the terminal device is BWP bandwidth information indicated by BWP configuration information in a RRC signaling.

In a possible implementation, the first information includes a number of times of repetitive transmission for a PDCCH configured in a RRC signaling and a number of slots included in each monitoring occasion in the PDCCH search space, where:

> when the number of the times of the repetitive transmission for the PDCCH is greater than or equal to the number of the slots included in each monitoring occasion indication in the PDCCH search space, N is equal to the number of the times of the repetitive transmission for the PDCCH;
> when the number of the times of the repetitive transmission for the PDCCH is smaller than the number of the slots included in each monitoring occasion indication in the PDCCH search space, N is equal to the number of the slots included in each monitoring occasion in the PDCCH search space.

In a possible implementation, the BWP bandwidth information of the terminal device is a bandwidth indicated by a control resource set CORESET carried in the PBCH.

In a possible implementation, the BWP bandwidth information is initial downlink BWP bandwidth information.

In a possible implementation, when the first information includes indication information carried by a PBCH, the determination module 161 is specifically configured to:

determine the N slots according to indication information of an information domain in a master information block MIB carried by the PBCH.

In a possible implementation, the determination module 161 is specifically configured to:

obtain the N slots according to a third mapping relationship between the indication information of the information domain in the MIB and the number of slots included in the monitoring occasion of the PDCCH, and the indication information of the information domain in the MIB.

In a possible implementation, the indication information of the information domain in the MIB is:

CORESET information indicated by a CORESET information domain, or, search space information indicated by a search space information domain.

In a possible implementation, the PDCCH search space is a common search space or a specific search space of the terminal device.

In a possible implementation, the PDCCH search space is a common search space.

The apparatus for determining a monitoring occasion provided in the embodiments of the present application may execute the technical solutions shown in the foregoing method embodiments, and the implementation principles and beneficial effects thereof are similar, and details are not repeated here.

FIG. 17 is a structural schematic diagram of a terminal device provided by an embodiment of the present application. Please refer to FIG. 17, a terminal device 30 may include a transceiver 31, a memory 32 and a processor 33. The transceiver 31 may include a transmitter and/or a receiver. The transmitter may also be referred to as a sender, sending set, transmitting port, or transmitting interface, or the like, and the receiver may also be referred to as a receptor, acceptor, receiving port, or receiving interface, or the like. Exemplarily, the transceiver 31, the memory 32, and the processor 33 are connected to each other through a bus 34.

The memory 32 is configured to store computer executable instructions;

the processor 33 is configured to execute the computer executable instructions stored in the memory, to enable the terminal device 30 to execute the method for determining a monitoring occasion described above.

The receiver of the transceiver 31 may be configured to execute the receiving function of the terminal device in the above described method for determining a monitoring occasion.

FIG. 18 is a structural schematic diagram of a network device provided by an embodiment of the present application. Please refer to FIG. 18, a network device 40 may include a transceiver 41, a memory 42 and a processor 43. The transceiver 41 may include a transmitter and/or a receiver. The transmitter may also be referred to as a sender, sending set, transmitting port, or transmitting interface, or the like, and the receiver may also be referred to as a receptor, acceptor, receiving port, or receiving interface, or the like. Exemplarily, the transceiver 41, the memory 42, and the processor 43 are connected to each other through a bus 44.

The memory 42 is configured to store computer executable instructions;

the processor 43 is configured to execute the computer executable instructions stored in the memory, to enable the network device 40 to execute any of the method for determining a monitoring occasion described above.

The transmitter of the transceiver 41 can be configured to execute the transmitting function of the network device in the above described method for determining a monitoring occasion.

The embodiments of the present application provides a computer readable storage medium, where computer executable instructions are stored in the computer readable storage medium, when the computer executable instructions are executed by a processor, the computer executable instructions are configured to implement the method for determining a monitoring occasion described above.

The embodiments of the present application provides a computer program product, the computer program product can be executed by a processor, when the computer program product is executed, any of the method for determining a monitoring occasion executed by the terminal device described above can be implemented.

The terminal device, the computer readable storage medium and the computer program product, can execute the method for determining a monitoring occasion executed by the terminal device described above, and its specific implementation processes and beneficial effects thereof are similar, and details are not repeated here.

In several embodiments provided by the present application, it should be understood that the disclosed system, apparatus and method may be implemented in other manners. For example, the apparatus embodiments described above are only illustrative. For example, the division of the units is only a logical function division. In actual implementation, there may be other division manners. For example, multiple units or components may be combined or man be integrated into another system, or some features can be ignored, or not implemented. On the other hand, the shown or discussed mutual coupling or direct coupling or communication connection may be indirect coupling or communication connection through some interfaces, devices or units, and may be in electrical, mechanical or other forms.

Units described as separate components may or may not be physically separated, and components displayed as units may or may not be physical units, that is, may be located in one place, or may be distributed to multiple network units. Some or all of the units may be selected according to actual needs to achieve the purpose of the solution of this embodiment. In addition, respective functional units in respective embodiments of the present application may be integrated into one processing unit, or each unit may exist physically alone, or two or more units may be integrated into one unit. The integrated units described above may be implemented in the form of hardware, or may be implemented in the form of software functional units.

Those ordinary skilled in this art can understand that: all or part of the steps of implementing the method embodiments described above may be completed through program instructions related to hardware. The aforementioned computer program may be stored in a computer readable storage medium. When the computer program is executed by a processor, it implements the steps including the above respective method embodiments; and the aforementioned storage medium includes: ROM, RAM, magnetic disk or optical disk and other mediums that can store program codes.

Finally, it should be noted that: the above respective embodiments are merely used to illustrate the technical solutions of the present application, but not to limit them; although the present application has been described in detail with reference to the foregoing respective embodiments, those ordinary skilled in this art should understand that: the technical solutions recorded in the foregoing respective embodiments can still be modified, or some or all of the technical features thereof can be equivalently replaced; and these modifications or replacements do not make the essence of the corresponding technical solutions deviate from the scope of the technical solutions of the respective embodiments of the present application.

**Claims**

1. A method for determining a monitoring occasion, applied in a terminal device, comprising:

   determining, according to first information, a number of times of repetitive transmission for a physical downlink control channel PDCCH; and
   determining N slots according to the number of the times of the repetitive transmission for the PDCCH, wherein N is used to indicate a number of slots comprised in the monitoring occasion for monitoring the PDCCH, and N is an integer greater than 1.

2. The method according to claim 1, wherein the N slots are slots comprised in the monitoring occasion of the PDCCH in a PDCCH search space.

3. The method according to claim 2, wherein N is greater than or equal to the number of the times of the repetitive transmission for the PDCCH.

4. The method according to claim 2 or 3, wherein the first information comprises at least one of following information:

   first indication information; and
   a frequency band.

5. The method according to claim 4, wherein the first indication information comprises at least one of following information:

bandwidth part BWP bandwidth information of the terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

6. The method according to claim 2 or 3, wherein the first information is a preset number of times of repetitive transmission for the PDCCH.

7. The method according to any one of claims 2-4, wherein when the first information comprises a frequency band, determining, according to the first information, the number of the times of the repetitive transmission for the PDCCH comprises:
obtaining, according to a first mapping relationship between the frequency band and the number of the times of the repetitive transmission for the PDCCH, the number of the times of the repetitive transmission for the PDCCH.

8. The method according to any one of claims 2-5, wherein when the first information comprises BWP bandwidth information of the terminal device, determining, according to the first information, the number of the times of the repetitive transmission for the PDCCH comprises:
obtaining, according to a second mapping relationship between a bandwidth indicated by respective BWP bandwidth information and the number of the times of the repetitive transmission for the PDCCH, and a bandwidth indicated by the BWP bandwidth information of the terminal device, the number of the times of the repetitive transmission for the PDCCH.

9. The method according to claim 8, wherein the BWP bandwidth information of the terminal device is BWP bandwidth information indicated by BWP configuration information in a RRC signaling.

10. The method according to any one of claims 2-5, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

11. The method according to claim 8, wherein the BWP bandwidth information of the terminal device is a bandwidth indicated by a control resource set CORESET carried in a PBCH.

12. The method according to claim 11, wherein, the BWP bandwidth information is initial downlink BWP bandwidth information.

13. The method according to any one of claims 2-5, wherein when the first information comprises indication information carried by a PBCH, determining, according to the first information, the number of the times of the repetitive transmission for the PDCCH comprises:
determining, according to indication information of an information domain in a master information block MIB carried by the PBCH, the number of the times of the repetitive transmission for the PDCCH.

14. The method according to claim 13, wherein determining, according to the indication information of the information domain in the master information block MIB carried by the PBCH, the number of the times of the repetitive transmission for the PDCCH comprises:
obtaining, according to a third mapping relationship between indication information of an information domain in a respective MIB and the number of the times of the repetitive transmission for the PDCCH, and the indication information of the information domain in the MIB, the number of the times of the repetitive transmission for the PDCCH.

15. The method according to claim 14, wherein the indication information of the information domain in the MIB is:
CORESET information indicated by a CORESET information domain, or, search space information indicated by a search space information domain.

16. The method according to any one of claims 1-15, wherein determining the N slots according to the number of the times of the repetitive transmission for the PDCCH comprises:
obtaining N according to a fourth mapping relationship between the number of the times of the repetitive transmission for the PDCCH and the number of the slots comprised in the monitoring occasion of the PDCCH, and the number of the times of the repetitive transmission for the PDCCH.

17. The method according to any one of claims 6-10, wherein the PDCCH search space is a common search space or a specific search space of the terminal device.

18. The method according to any one of claims 11-15, wherein the PDCCH search space is a common search space.

19. A method for determining a monitoring occasion, applied in a terminal device, comprising:
determining N slots according to first information, wherein the N slots are used to indicate a number of slots comprised in the monitoring occasion for monitoring a PDCCH, N is an integer greater than 1, and the first information comprises at least one of following information:

first indication information, a frequency band;
or, the first information is a preset number of slots comprised in the monitoring occasion of the PDCCH.

20. The method according to claim 19, wherein the N slots are slots comprised in the monitoring occasion of the PDCCH in a PDCCH search space.

21. The method according to claim 20, wherein N is greater than or equal to a number of times of repetitive transmission for the PDCCH.

22. The method according to claim 20 or 21, wherein the first indication information comprises at least one of following information:

bandwidth part BWP bandwidth information of the terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

23. The method according to claim 20 or 21, wherein when the first information comprises the frequency band, determining the N slots according to the first information comprises:
obtaining N according to a first mapping relationship between the frequency band and the number of slots comprised in the monitoring occasion.

24. The method according to any one of claims 20-22, wherein when the first information comprises BWP bandwidth information of the terminal device, determining the N slots according to the first information comprises:
obtaining N according to a second mapping relationship between a bandwidth indicated by respective BWP bandwidth information and the number of slots comprised in the monitoring occasion of the PDCCH, and a bandwidth indicated by the BWP bandwidth information of the terminal device.

25. The method according to claim 24, wherein the BWP bandwidth information of the terminal device is BWP bandwidth information indicated by BWP configuration information in a RRC signaling.

26. The method according to any one of claims 20-22, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

**27.** The method according to claim 24, wherein the BWP bandwidth information of the terminal device is a bandwidth indicated by a control resource set CORESET carried in a PBCH.

**28.** The method according to claim 27, wherein the BWP bandwidth information is initial downlink BWP bandwidth information.

**29.** The method according to any one of claims 20-22, wherein when the first information comprises indication information carried by a PBCH, determining the N slots according to the first information comprises:
determining the N slots according to indication information of an information domain in a master information block MIB carried by the PBCH.

**30.** The method according to claim 29, wherein determining the N slots according to indication information of the information domain in the master information block MIB carried by the PBCH comprises:
obtaining the N slots according to a third mapping relationship between the indication information of the information domain in the MIB and the number of slots comprised in the monitoring occasion of the PDCCH, and the indication information of the information domain in the MIB.

**31.** The method according to claim 30, wherein the indication information of the information domain in the MIB is:
CORESET information indicated by a CORESET information domain, or, search space information indicated by a search space information domain.

**32.** The method according to any one of claims 23-26, wherein the PDCCH search space is a common search space or a specific search space of the terminal device.

**33.** The method according to any one of claims 27-31, wherein the PDCCH search space is a common search space.

**34.** A method for determining a monitoring occasion, applied in a network device, comprising:

determining, according to first information, a number of times of repetitive transmission for a PDCCH; and
determining N slots according to the number of the times of the repetitive transmission for the PDCCH, wherein N is used to indicate a number of slots comprised in the monitoring occasion of a PDCCH, and N is an integer greater than 1.

**35.** The method according to claim 34, wherein the N slots are slots comprised in the monitoring occasion of the PDCCH in a PDCCH search space.

**36.** The method according to claim 35, wherein N is greater than or equal to the number of the times of the repetitive transmission for the PDCCH.

**37.** The method according to claim 35 or 36, wherein the first information comprises at least one of following information:

first indication information; and
a frequency band.

**38.** The method according to claim 37, wherein the first indication information comprises at least one of following information:

bandwidth part BWP bandwidth information of a terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

**39.** The method according to claim 35 or 36, wherein the first information is a preset number of times of repetitive transmission for the PDCCH.

**40.** The method according to any one of claims 35-37, wherein when the first information comprises a frequency band, determining, according to the first information, the number of the times of the repetitive transmission for the PDCCH comprises:

obtaining, according to a first mapping relationship between the frequency band and the number of the times of the repetitive transmission for the PDCCH, the number of the times of the repetitive transmission for the PDCCH.

41. The method according to any one of claims 35-38, wherein when the first information comprises BWP bandwidth information of a terminal device, determining, according to the first information, the number of the times of the repetitive transmission for the PDCCH comprises:
obtaining, according to a second mapping relationship between a bandwidth indicated by respective BWP bandwidth information and the number of the times of the repetitive transmission for the PDCCH, and a bandwidth indicated by the BWP bandwidth information of the terminal device, the number of the times of the repetitive transmission for the PDCCH.

42. The method according to claim 41, wherein the BWP bandwidth information of the terminal device is BWP bandwidth information indicated by BWP configuration information in a RRC signaling.

43. The method according to any one of claims 35-38, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

44. The method according to claim 41, wherein the BWP bandwidth information of the terminal device is a bandwidth indicated by a control resource set CORESET carried in a PBCH.

45. The method according to claim 44, wherein the BWP bandwidth information is initial downlink BWP bandwidth information.

46. The method according to any one of claims 35-38, wherein when the first information comprises indication information carried by a PBCH, determining, according to the first information, the number of the times of the repetitive transmission for the PDCCH comprises:
determining, according to indication information of an information domain in a master information block MIB carried by the PBCH, the number of the times of the repetitive transmission for the PDCCH.

47. The method according to claim 46, wherein determining, according to the indication information of the information domain in the master information block MIB carried by the PBCH, the number of the times of the repetitive transmission for the PDCCH comprises:
obtaining, according to a third mapping relationship between indication information of an information domain in a respective MIB and the number of the times of the repetitive transmission for the PDCCH, and the indication information of the information domain in the MIB, the number of the times of the repetitive transmission for the PDCCH.

48. The method according to claim 47, wherein the indication information of the information domain in the MIB is:
CORESET information indicated by a CORESET information domain, or, search space information indicated by a search space information domain.

49. The method according to any one of claims 34-48, wherein determining the N slots according to the number of the times of the repetitive transmission for the PDCCH comprises:
obtaining N according to a fourth mapping relationship between the number of the times of the repetitive transmission for the PDCCH and the number of the slots comprised in the monitoring occasion of the PDCCH, and the number of the times of the repetitive transmission for the PDCCH.

50. The method according to any one of claims 39-43, wherein the PDCCH search space is a common search space or a specific search space of the terminal device.

51. The method according to any one of claims 44-48, wherein the PDCCH search space is a common search space.

**52.** A method for determining a monitoring occasion, applied in a network device, comprising:
determining N slots according to first information, wherein the N slots are used to indicate a number of slots comprised in the monitoring occasion of a PDCCH, N is an integer greater than 1, and the first information comprises at least one of following information:

first indication information, a frequency band;
or, the first information is a preset number of slots comprised in the monitoring occasion of the PDCCH.

**53.** The method according to claim 52, wherein the N slots are slots comprised in the monitoring occasion of the PDCCH in a PDCCH search space.

**54.** The method according to claim 53, wherein N is greater than or equal to a number of times of repetitive transmission for the PDCCH.

**55.** The method according to claim 53 or 54, wherein the first indication information comprises at least one of following information:

bandwidth part BWP bandwidth information of a terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

**56.** The method according to claim 53 or 54, wherein when the first information comprises the frequency band, determining the N slots according to the first information comprises:
obtaining N according to a first mapping relationship between the frequency band and the number of slots comprised in the monitoring occasion.

**57.** The method according to any one of claims 53-55, wherein when the first information comprises BWP bandwidth information of a terminal device, determining the N slots according to the first information comprises:
obtaining N according to a second mapping relationship between a bandwidth indicated by respective BWP bandwidth information and the number of slots comprised in the monitoring occasion of the PDCCH, and a bandwidth indicated by the BWP bandwidth information of the terminal device.

**58.** The method according to claim 57, wherein the BWP bandwidth information of the terminal device is BWP bandwidth information indicated by BWP configuration information in a RRC signaling.

**59.** The method according to any one of claims 53-55, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

**60.** The method according to claim 57, wherein the BWP bandwidth information of the terminal device is a bandwidth indicated by a control resource set CORESET carried in a PBCH.

**61.** The method according to claim 60, wherein the BWP bandwidth information is initial downlink BWP bandwidth information.

**62.** The method according to any one of claims 53-55, wherein when the first information comprises indication information carried by a PBCH, determining the N slots according to the first information comprises:
determining the N slots according to indication information of an information domain in a master information block MIB carried by the PBCH.

**63.** The method according to claim 62, wherein determining the N slots according to indication information of the information domain in the master information block MIB carried by the PBCH comprises:
obtaining the N slots according to a third mapping relationship between the indication information of the information domain in the MIB and the number of slots comprised in the monitoring occasion of the PDCCH, and the indication information of the information domain in the MIB.

**64.** The method according to claim 63, wherein the indication information of the information domain in the MIB is:
CORESET information indicated by a CORESET information domain, or, search space information indicated by a search space information domain.

**65.** The method according to any one of claims 56-59, wherein the PDCCH search space is a common search space or a specific search space of the terminal device.

**66.** The method according to any one of claims 60-64, wherein the PDCCH search space is a common search space.

**67.** An apparatus for determining a monitoring occasion, comprising:

a first processing module, configured to determine, according to first information, a number of times of repetitive transmission for a PDCCH; and
a second processing module, configured to determine N slots according to the number of the times of the repetitive transmission for the PDCCH, wherein N is used to indicate a number of slots comprised in the monitoring occasion for monitoring the PDCCH, and N is an integer greater than 1.

**68.** The apparatus according to claim 67, wherein the N slots are slots comprised in the monitoring occasion of the PDCCH in a search space of the PDCCH.

**69.** The apparatus according to claim 68, wherein N is greater than or equal to the number of the times of the repetitive transmission for the PDCCH.

**70.** The apparatus according to claim 68 or 69, wherein the first information comprises at least one of following information:

first indication information; and
a frequency band.

**71.** The apparatus according to claim 70, wherein the first indication information comprises at least one of following information:

bandwidth part BWP bandwidth information of a terminal device;
indication information carried by a physical broadcast channel PBCH;
a number of times of repetitive transmission for a PDCCH configured in a radio resource control RRC signaling and a number of slots comprised in each monitoring occasion in the PDCCH search space.

**72.** The apparatus according to claim 68 or 69, wherein the first information is a preset number of times of repetitive transmission for the PDCCH.

**73.** The apparatus according to any one of claims 68-70, wherein when the first information comprises a frequency band, the first processing module is specifically configured to:
obtain, according to a first mapping relationship between the frequency band and the number of the times of the repetitive transmission for the PDCCH, the number of the times of the repetitive transmission for the PDCCH.

**74.** The apparatus according to any one of claims 68-71, wherein when the first information comprises BWP bandwidth information of a terminal device, the first processing module is specifically configured to:
obtain, according to a second mapping relationship between a bandwidth indicated by respective BWP bandwidth information and the number of the times of the repetitive transmission for the PDCCH, and a bandwidth indicated by the BWP bandwidth information of the terminal device, the number of the times of the repetitive transmission for the PDCCH.

**75.** The apparatus according to claim 74, wherein the BWP bandwidth information of the terminal device is BWP bandwidth information indicated by BWP configuration information in a RRC signaling.

76. The apparatus according to any one of claims 68-71, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

77. The apparatus according to claim 74, wherein the BWP bandwidth information of the terminal device is a bandwidth indicated by a control resource set CORESET carried in a PBCH.

78. The apparatus according to claim 77, wherein the BWP bandwidth information is initial downlink BWP bandwidth information.

79. The apparatus according to any one of claims 68-71, wherein when the first information comprises indication information carried by a PBCH, the first processing module is specifically configured to:
determine, according to indication information of an information domain in a master information block MIB carried by the PBCH, the number of the times of the repetitive transmission for the.

80. The apparatus according to claim 79, wherein the first processing module is specifically configured to:
obtain, according to a third mapping relationship between indication information of an information domain in a respective MIB and the number of the times of the repetitive transmission for the PDCCH, and the indication information of the information domain in the MIB, the number of the times of the repetitive transmission for the PDCCH.

81. The apparatus according to claim 80, wherein the indication information of the information domain in the MIB is: CORESET information indicated by a CORESET information domain, or, search space information indicated by a search space information domain.

82. The apparatus according to any one of claims 67-81, wherein the second processing module is specifically configured to:
obtain N according to a fourth mapping relationship between the number of the times of the repetitive transmission for the PDCCH and the number of the slots comprised in the monitoring occasion of the PDCCH, and the number of the times of the repetitive transmission for the PDCCH.

83. The apparatus according to any one of claims 72-76, wherein the PDCCH search space is a common search space or a specific search space of a terminal device.

84. The apparatus according to any one of claims 77-81, wherein the PDCCH search space is a common search space.

85. An apparatus for determining a monitoring occasion, comprising:
a determination module, configured to determine N slots according to first information, wherein the N slots are used to indicate a number of slots comprised in the monitoring occasion for monitoring a PDCCH, N is an integer greater than 1, and the first information comprises at least one of following information:

first indication information, a frequency band;
or, the first information is a preset number of slots comprised in the monitoring occasion of the PDCCH.

86. The apparatus according to claim 85, wherein the N slots are slots comprised in the monitoring occasion of the PDCCH in a PDCCH search space.

87. The apparatus according to claim 86, wherein N is greater than or equal to a number of times of repetitive transmission for the PDCCH.

88. The apparatus according to claim 86 or 87, wherein the first indication information comprises at least one of following information:

bandwidth part BWP bandwidth information of a terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

89. The apparatus according to claim 86 or 87, wherein when the first information comprises the frequency band, the determination module is specifically configured to:
obtain N according to a first mapping relationship between the frequency band and the number of slots comprised in the monitoring occasion.

90. The apparatus according to any one of claims 86-88, wherein when the first information comprises BWP bandwidth information of a terminal device, the determination module is specifically configured to:
obtain N according to a second mapping relationship between a bandwidth indicated by respective BWP bandwidth information and the number of slots comprised in the monitoring occasion of the PDCCH, and a bandwidth indicated by the BWP bandwidth information of the terminal device.

91. The apparatus according to claim 90, wherein the BWP bandwidth information of the terminal device is BWP bandwidth information indicated by BWP configuration information in a RRC signaling.

92. The apparatus according to any one of claims 86-88, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

93. The apparatus according to claim 90, wherein the BWP bandwidth information of the terminal device is a bandwidth indicated by a control resource set CORESET carried in a PBCH.

94. The apparatus according to claim 93, wherein the BWP bandwidth information is initial downlink BWP bandwidth information.

95. The apparatus according to any one of claims 86-88, wherein when the first information comprises indication information carried by a PBCH, the determination module is specifically configured to:
determine the N slots according to indication information of an information domain in a master information block MIB carried by the PBCH.

96. The apparatus according to claim 95, wherein the determination module is specifically configured to:
obtain the N slots according to a third mapping relationship between the indication information of the information domain in the MIB and the number of slots comprised in the monitoring occasion of the PDCCH, and the indication information of the information domain in the MIB.

97. The apparatus according to claim 96, wherein the indication information of the information domain in the MIB is:
CORESET information indicated by a CORESET information domain, or, search space information indicated by a search space information domain.

98. The apparatus according to any one of claims 89-92, wherein the PDCCH search space is a common search space or a specific search space of the terminal device.

99. The apparatus according to any one of claims 93-97, wherein the PDCCH search space is a common search space.

100. An apparatus for determining a monitoring occasion, comprising:

a first processing module, configured to determine, according to first information, a number of times of repetitive transmission for a PDCCH; and

a second processing module, configured to determine N slots according to the number of the times of the repetitive transmission for the PDCCH, wherein N is used to indicate a number of slots comprised in the monitoring occasion of a PDCCH, and N is an integer greater than 1.

101. The apparatus according to claim 100, wherein the N slots are slots comprised in the monitoring occasion of the PDCCH in a PDCCH search space.

102. The apparatus according to claim 101, wherein N is greater than or equal to the number of the times of the repetitive transmission for the PDCCH.

103. The apparatus according to claim 101 or 102, wherein the first information comprises at least one of following information:

first indication information; and
a frequency band.

104. The apparatus according to claim 103, wherein the first indication information comprises at least one of following information:

bandwidth part BWP bandwidth information of a terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

105. The apparatus according to claim 101 or 102, wherein the first information is a preset number of times of repetitive transmission for the PDCCH.

106. The apparatus according to any one of claims 101-103, wherein when the first information comprises a frequency band, the first processing module is specifically configured to:
obtain, according to a first mapping relationship between the frequency band and the number of the times of the repetitive transmission for the PDCCH, the number of the times of the repetitive transmission for the PDCCH.

107. The apparatus according to any one of claims 101-104, wherein when the first information comprises BWP bandwidth information of a terminal device, the first processing module is specifically configured to:
obtain, according to a second mapping relationship between a bandwidth indicated by respective BWP bandwidth information and the number of the times of the repetitive transmission for the PDCCH, and a bandwidth indicated by the BWP bandwidth information of the terminal device, the number of the times of the repetitive transmission for the PDCCH.

108. The apparatus according to claim 107, wherein the BWP bandwidth information of the terminal device is BWP bandwidth information indicated by BWP configuration information in a RRC signaling.

109. The apparatus according to any one of claims 101-104, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

110. The apparatus according to claim 107, wherein the BWP bandwidth information of the terminal device is a bandwidth indicated by a control resource set CORESET carried in a PBCH.

111. The apparatus according to claim 110, wherein the BWP bandwidth information is initial downlink BWP bandwidth information.

112. The apparatus according to any one of claims 101-104, wherein when the first information comprises indication information carried by a PBCH, the first processing module is specifically configured to:
determine, according to indication information of an information domain in a master information block MIB carried by the PBCH, the number of the times of the repetitive transmission for the PDCCH.

113. The apparatus according to claim 112, wherein the first processing module is specifically configured to:
obtain, according to a third mapping relationship between indication information of an information domain in a respective MIB and the number of the times of the repetitive transmission for the PDCCH, and the indication information of the information domain in the MIB, the number of the times of the repetitive transmission for the PDCCH.

114. The apparatus according to claim 113, wherein the indication information of the information domain in the MIB is:
CORESET information indicated by a CORESET information domain, or, search space information indicated by a search space information domain.

115. The apparatus according to any one of claims 101-114, wherein the second processing module is specifically configured to:
obtain N according to a fourth mapping relationship between the number of the times of the repetitive transmission for the PDCCH and the number of the slots comprised in the monitoring occasion of the PDCCH, and the number of the times of the repetitive transmission for the PDCCH.

116. The apparatus according to any one of claims 105-109, wherein the PDCCH search space is a common search space or a specific search space of the terminal device.

117. The apparatus according to any one of claims 110-114, wherein the PDCCH search space is a common search space.

118. An apparatus for determining a monitoring occasion, comprising:
a determination module, configured to determine N slots according to first information, wherein the N slots are used to indicate a number of slots comprised in the monitoring occasion of a PDCCH, N is an integer greater than 1, and the first information comprises at least one of following information:

first indication information, a frequency band;
or, the first information is a preset number of slots comprised in the monitoring occasion of the PDCCH.

119. The apparatus according to claim 118, wherein the N slots are slots comprised in the monitoring occasion of the PDCCH in a PDCCH search space.

120. The apparatus according to claim 119, wherein N is greater than or equal to a number of times of repetitive transmission for the PDCCH.

121. The apparatus according to claim 119 or 120, wherein the first indication information comprises at least one of following information:

bandwidth part BWP bandwidth information of a terminal device;
indication information carried by a physical broadcast channel PBCH;
a number of times of repetitive transmission for the PDCCH configured in a radio resource control RRC signaling and a number of slots comprised in each monitoring occasion in the PDCCH search space.

122. The apparatus according to claim 119 or 120, wherein when the first information comprises the frequency band, the determination module is specifically configured to:
obtain N according to a first mapping relationship between the frequency band and the number of slots comprised in the monitoring occasion.

123. The apparatus according to any one of claims 119-121, wherein when the first information comprises BWP bandwidth information of a terminal device, the determination module is specifically configured to:
obtain N according to a second mapping relationship between a bandwidth indicated by respective BWP bandwidth information and the number of slots comprised in the monitoring occasion of the PDCCH, and a bandwidth indicated by the BWP bandwidth information of the terminal device.

124. The apparatus according to claim 123, wherein the BWP bandwidth information of the terminal device is BWP bandwidth information indicated by BWP configuration information in a RRC signaling.

125. The apparatus according to any one of claims 119-121, wherein the first information comprises a number of times of repetitive transmission for a PDCCH configured in a RRC signaling and a number of slots comprised in each monitoring occasion in the PDCCH search space, wherein:

when the number of the times of the repetitive transmission for the PDCCH is greater than or equal to the number of the slots comprised in each monitoring occasion indication in the PDCCH search space, N is equal to the number of the times of the repetitive transmission for the PDCCH;
when the number of the times of the repetitive transmission for the PDCCH is smaller than the number of the slots comprised in each monitoring occasion indication in the PDCCH search space, N is equal to the number of the slots comprised in each monitoring occasion in the PDCCH search space.

126. The apparatus according to claim 123, wherein the BWP bandwidth information of the terminal device is a bandwidth indicated by a control resource set CORESET carried in a PBCH.

127. The apparatus according to claim 126, wherein the BWP bandwidth information is initial downlink BWP bandwidth information.

128. The apparatus according to any one of claims 119-121, wherein when the first information comprises indication information carried by a PBCH, the determination module is specifically configured to:
determine the N slots according to indication information of an information domain in a master information block MIB carried by the PBCH.

129. The apparatus according to claim 128, wherein the determination module is specifically configured to:
obtain the N slots according to a third mapping relationship between the indication information of the information domain in the MIB and the number of slots comprised in the monitoring occasion of the PDCCH, and the indication information of the information domain in the MIB.

130. The apparatus according to claim 129, wherein the indication information of the information domain in the MIB is: CORESET information indicated by a CORESET information domain, or, search space information indicated by a search space information domain.

131. The apparatus according to any one of claims 122-125, wherein the PDCCH search space is a common search space or a specific search space of the terminal device.

132. The apparatus according to any one of claims 126-130, wherein the PDCCH search space is a common search space.

133. A terminal device, comprising: a transceiver, a processor, a memory;

the memory stores computer executable instructions;
the processor executes the computer executable instructions stored in the memory, to enable the processor to execute the method for determining a monitoring occasion according to any one of claims 1 to 18, or to enable the processor to execute the method for determining a monitoring occasion according to any one of claims 19 to 33.

134. A network device, comprising: a transceiver, a processor, a memory;

the memory stores computer executable instructions;
the processor executes the computer executable instructions stored in the memory, to enable the processor to execute the method for determining a monitoring occasion according to any one of claims 34 to 51, or to enable the processor to execute the method for determining a monitoring occasion according to any one of claims 52 to 66.

**135.** A computer readable storage medium, wherein computer executable instructions are stored in the computer readable storage medium, when the computer executable instructions are executed by a processor, the computer executable instructions are configured to implement the method for determining a monitoring occasion according to any one of claims 1 to 18, or when the computer executable instructions are executed by a processor, the computer executable instructions are configured to implement the method for determining a monitoring occasion according to any one of claims 19 to 33.

**136.** A computer readable storage medium, wherein computer executable instructions are stored in the computer readable storage medium, when the computer executable instructions are executed by a processor, the computer executable instructions are configured to implement the method for determining a monitoring occasion according to any one of claims 34 to 51, or when the computer executable instructions are executed by a processor, the computer executable instructions are configured to implement the method for determining a monitoring occasion according to any one of claims 52 to 66.

Network device

Terminal device

FIG. 1

B1
B2
B3
B4

FIG 2

FIG. 3

FIG. 4

SNF mod 2=0       SNF mod 2=1

| O=0, M=1 | | 0 | 1 | 2 | 3 | 4 | 5 | 6 | 7 | 8 | 9 | 0 | 1 | 2 | 3 | 4 | 5 | 6 | 7 | 8 | 9 |

O=0, M=1/2

O=2, M=1

O=2, M=1/2

O=5, M=1

O=5, M=1/2

O=7, M=1

O=7, M=1/2

O=0, M=2

O=5, M=2

FIG. 5

| Determining, according to first information, a number of times of repetitive transmission for a PDCCH | S61 |

| Determining N slots according to the number of the times of the repetitive transmission for the PDCCH, where N is used to indicate a number of slots included in the monitoring occasion for monitoring the PDCCH, and N is an integer greater than 1 | S62 |

FIG. 6

| Determining N slots according to first information, where the N slots are used to indicate a number of slots included in the monitoring occasion for monitoring a PDCCH | S71 |

FIG. 7

slot1   slot2   slot3   slot4   slot5   slot6   slot7   slot8     slot17 slot18 slot19 slot20   Time

FIG. 8

| Frequency band distribution | n1 | n2 | n3 | n5 | n7 | n8 | ... | n77 | n78 | n79 | First mapping relationship |
|---|---|---|---|---|---|---|---|---|---|---|---|
| Value of K | K =4 | K =4 | K =4 | K=8 | K =8 | K =8 | ... | K =16 | K =16 | K =16 | |

| Fourth mapping relationship | N=K+1 | | | | | | | | | |
|---|---|---|---|---|---|---|---|---|---|---|
| Value of N | N =5 | N =5 | N =5 | N =9 | N =9 | N =9 | ... | N =17 | N =17 | N =17 |

FIG. 9

| Frequency band distribution | n1 | n2 | n3 | n5 | n7 | n8 | ... | n77 | n78 | n79 | First mapping relationship |
|---|---|---|---|---|---|---|---|---|---|---|---|
| Value of N | N =4 | N =4 | N =4 | N =8 | N =8 | N =8 | ... | N =16 | N =16 | N =16 | |

FIG. 10

Determining, according to first information, a number of times of repetitive transmission for a PDCCH —— S111

Determining N slots according to the number of the times of the repetitive transmission for the PDCCH, where N is used to indicate a number of slots included in the monitoring occasion for monitoring the PDCCH, and N is an integer greater than 1 —— S112

FIG. 11

Determining N slots according to first information, where the N slots are used to indicate a number of slots included in the monitoring occasion for monitoring a PDCCH —— S121

FIG. 12

EP 4 113 873 A1

FIG. 13

FIG. 14

FIG. 15

Apparatus for determining a
monitoring occasion 160

161

Determination
module

FIG. 16

Terminal device 30

33
Processor

34

32
Memory

31
Transceiver

FIG. 17

Network device 40

43
Processor

44

42
Memory

41
Transceiver

FIG. 18

## INTERNATIONAL SEARCH REPORT

| International application No. |
| --- |
| **PCT/CN2020/077948** |

| A. | CLASSIFICATION OF SUBJECT MATTER |
| --- | --- |
| | H04L 1/00(2006.01)i |

According to International Patent Classification (IPC) or to both national classification and IPC

| B. | FIELDS SEARCHED |
| --- | --- |

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: PDCCH, 重复, 重传, 数, 监听, 时机, 时隙, 帧, 符号, 映射, 绑定, repetition, retransmission, times, number, monitoring, listening, occasion, slot, frame, symbol, NR, light, bind, map

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020020780 A1 (SONY CORPORATION et al.) 30 January 2020 (2020-01-30) description page 6 line 26 to page 7 line 26, page 12 line 24 to page 15 line 5, page 18 line 24 to page 20 line 19, figures 3-9 | 1-136 |
| A | WO 2020006416 A1 (QUALCOMM INCORPORATED) 02 January 2020 (2020-01-02) entire document | 1-136 |
| A | US 2020022144 A1 (SAMSUNG ELECTRONICS CO., LTD.) 16 January 2020 (2020-01-16) entire document | 1-136 |
| A | EP 3086491 A1 (LG ELECTRONICS INC.) 26 October 2016 (2016-10-26) entire document | 1-136 |
| A | CN 110149661 A (ZTE CORPORATION) 20 August 2019 (2019-08-20) entire document | 1-136 |
| A | VIVO. "Discussion on PDCCH repetition for URLLC" *3GPP TSG RAN WG1 Meeting #92bis R1-1803847*, 20 April 2018 (2018-04-20), entire document | 1-136 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 November 2020** | **01 December 2020** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/077948**

| Patent document cited in search report | | | Publication date (day/month/year) | Patent family member(s) | | | Publication date (day/month/year) |
|---|---|---|---|---|---|---|---|
| WO | 2020020780 | A1 | 30 January 2020 | None | | | |
| WO | 2020006416 | A1 | 02 January 2020 | None | | | |
| US | 2020022144 | A1 | 16 January 2020 | WO | 2020013559 | A1 | 16 January 2020 |
| EP | 3086491 | A1 | 26 October 2016 | WO | 2015093851 | A1 | 25 June 2015 |
| | | | | US | 2016278054 | A1 | 22 September 2016 |
| CN | 110149661 | A | 20 August 2019 | WO | 2019158013 | A1 | 22 August 2019 |

Form PCT/ISA/210 (patent family annex) (January 2015)